(19) 

Europäisches
Patentamt
European
Patent Office
Office européen
des brevets

(11) **EP 1 863 002 A1**

(12) **EUROPEAN PATENT APPLICATION**
published in accordance with Art. 158(3) EPC

(43) Date of publication:
05.12.2007 Bulletin 2007/49

(21) Application number: 06729123.7

(22) Date of filing: 15.03.2006

(51) Int Cl.:
*G09G 3/32* (2006.01) *G09G 3/20* (2006.01)
*G09G 5/00* (2006.01)

(86) International application number:
PCT/JP2006/305102

(87) International publication number:
WO 2006/100977 (28.09.2006 Gazette 2006/39)

(84) Designated Contracting States:
BE DE GB

(30) Priority: 23.03.2005 JP 2005082984
06.04.2005 JP 2005109508

(71) Applicant: MITSUBISHI ELECTRIC
CORPORATION
Chiyoda-ku
Tokyo 100-8310 (JP)

(72) Inventors:
• NAMIKI, Ryosuke,
c/o Mitsubishi Electric Corp.
100-8310 Tokyo (JP)

• KAGAWA, Shuichi,
c/o Mitsubishi Electric Corp.
100-8310 Tokyo (JP)
• SUGIURA, Hiroaki,
c/o Mitsubishi Electric Corp.
100-8310 Tokyo (JP)
• MAESHIMA, Kazuya,
c/o Mitsubishi Electric Corp.
100-8310 Tokyo (JP)
• ETOU, Chikara,
c/o Mitsubishi Electric Engeneering Co., Ltd.
102-0073 Tokyo (JP)

(74) Representative: Pfenning, Meinig & Partner GbR
Patent- und Rechtsanwälte
Theresienhöhe 13
80339 München (DE)

(54) **DISPLAY DEVICE**

(57) A first color conversion means (22) is provided to convert the luminance and chrominance of the entire display module, and a second color conversion means (32) is provided to convert luminance and chrominance within a display unit. When one of the constituent display units of the display apparatus is replaced, the chromaticity of the display apparatus can be readjusted without rewriting all of the luminance conversion data and chrominance conversion data. When a plurality of display units are combined to form a display module, the luminance and chrominance of all of the light-emitting elements in the display module can be adjusted easily.

FIG.1

EP 1 863 002 A1

**Description**

FIELD OF THE INVENTION

The present invention relates to display apparatus comprising a screen or display section (display module) made up of a plurality of display units, more particularly to technology for obtaining consistent chromaticity across the entire display.

BACKGROUND ART

To achieve consistent chrominance in each pixel, in conventional display apparatus, (Patent Document 1, for example) part of the corrective current supplied to a light-emitting element to correct its chromaticity is switchably supplied to another light-emitting element in the same pixel. Patent Document 1: Japanese Patent Application Publication No. 2003-99003 (Fig. 3)

DISCLOSURE OF THE INVENTION

Problems to be Solved by the Invention

With this type of display apparatus, when one of the light-emitting elements in the display apparatus fails or becomes degraded, so that a display unit in the display apparatus has to be replaced and the chromaticity of the entire display apparatus has to be readjusted, it is necessary to make adjustments for all of the light-emitting elements in the display apparatus. A resultant problem is that it is necessary to rewrite all of the luminance conversion data and chrominance conversion data.

A further problem is that when a plurality of display units are combined into a display module, it is necessary to adjust the luminance and chrominance of all of the light-emitting elements in the module, and the adjustment is difficult.

The present invention addresses the above problems with the object of enabling the chromaticity of a display apparatus to be readjusted when a display unit is replaced without rewriting all of the luminance conversion data and chrominance conversion data.

A further object of the invention is to facilitate the adjustment of the luminance and chrominance of all light-emitting elements in a display module when a plurality of display units are combined to form the display module.

Means of Solution of the Problems

The present invention provides a display apparatus in which a plurality of display units are arranged to form a display module, the display apparatus comprising a first storage means for storing information including first color conversion parameters for eliminating color variations occurring between different display units, the first color conversion parameters being derived for each display unit on the basis of information about the display characteristics of the display unit, and a first color conversion means for obtaining image data and the first color conversion parameters, performing a color conversion on the image data according to the first color conversion parameters, and outputting first color-converted image data, wherein each display unit has a light-emitting unit in which a plurality of light-emitting elements of different colors are disposed in each pixel, a second storage means for storing information including second color conversion parameters for eliminating color variations occurring within the display unit, the second color conversion parameters being derived for each pixel on the basis of information about the chromatic characteristics of the light-emitting elements, and a second color conversion means for obtaining the first color-converted image data and the second color conversion parameters and performing a color conversion on the first color-converted data according to the second color conversion parameters.

Effect of the Invention

As the present invention provides a first color conversion means for the display module and a second color conversion means in the display units, when a display unit is replaced, the chromaticity of the display apparatus can be readjusted just by rewriting the first color conversion parameters (P1) and the second color conversion parameters (P2) provided in the replaced display unit.

BRIEF DESCRIPTION OF THE DRAWINGS

FIG. 1 is a schematic block diagram of a display apparatus in a first embodiment of the invention.

FIG. 2 is a block diagram showing the structure of each of the display units 30a-30i in the first embodiment.

FIG. 3 shows an exemplary pixel PX comprising red, green, and blue light-emitting diodes LR, LG, and LB.

FIG. 4 is a schematic block diagram of the image data generator in the display apparatus in the first embodiment of the invention.

FIG. 5 is a schematic block diagram of a display apparatus in a second embodiment of the invention.

FIG. 6 is a block diagram showing the structure of each of the nth-stage display units 50a-50i in the second embodiment.

FIG. 7 is a block diagram showing the structure of each of the Nth-stage display units 70a-70i in the second embodiment.

FIG. 8 is a schematic block diagram of a display apparatus in a third embodiment of the invention.

FIG. 9 is a block diagram showing the structure of each of the display units 80a-80i in the third embodiment.

FIG. 10 is a schematic block diagram of a display apparatus in a fourth embodiment of the invention.

FIG. 11 is a block diagram showing the structure of each of the nth-stage display units 100a-100i in the fourth embodiment.

FIG. 12 is a block diagram showing the structure of each of the Nth-stage display units 120a-120i in the fourth embodiment.

FIG. 13 is a schematic block diagram of a display apparatus in a fifth embodiment of the invention.

FIG. 14 is a block diagram showing the structure of each of the display units 230a-230i in the fifth embodiment.

FIG. 15 is a schematic block diagram of a display apparatus in a sixth embodiment of the invention.

FIG. 16 is a block diagram showing the structure of each of the nth-stage display units 250a-250i in the sixth embodiment.

FIG. 17 is a block diagram showing the structure of each of the Nth-stage display units 270a-270i in the sixth embodiment.

FIG. 18 is a schematic block diagram of a display apparatus in a seventh embodiment of the invention.

FIG. 19 is a block diagram showing the structure of each of the display units 280a-280i in the seventh embodiment.

FIG. 20 is a schematic block diagram of a display apparatus in an eighth embodiment of the invention.

FIG. 21 is a block diagram showing the structure of each of the nth-stage display units 300a-300i in the eighth embodiment.

FIG. 22 is a block diagram showing the structure of each of the Nth-stage display units 310a-310i in the eighth embodiment.

Explanation of Reference Characters

10 image data generator, 10L transmission line, 11 analog-to-digital converter (A/D), 12 image signal processor, 13, 24, 44 image data transmitter, 20, 20B, 20C, 20D display module, 21 image data receiver, 22 first color conversion means, 23 first memory means, 24 image data transmitter, 25 gray-scale transforming means, 25b first gray-scale transforming means,

30a to 30i inverse gray-scale transformation means, 31 data receiver, 32 second color conversion means, 33 second memory means, 34 image data converter, 35 driver, 36 light-emitting unit, 37 second color conversion means, 38 inverse gray-scale transforming means,

40a to 40i first-stage display units, 41 image data receiver, 42 (n + 1)th color conversion means, 43 (n + 1)th memory means, 44 image data transmitter, 45 (n + 1)th gray-scale transforming means, 47 (n + 1)th color conversion means, 48 nth inverse gray-scale transforming means

50a to 50i nth-stage display units, 51 image data receiver, 52 (N + 1)th color conversion means, 53 (N + 1)th memory means, 54 image data converter, 55 driver, 56 light-emitting unit, 57 (N + 1)th color conversion means, 58 Nth inverse gray-scale transforming means

60a to 60i (n + 1)th-stage display units, 70a to 70i Nth-stage display units, 80a to 80i display units, 90a to 90i first-stage display units, 100a to 100i, nth-stage display units, 110a to 110i (n + 1)th-stage display units, 120a to 120i Nth-stage display units, 220, 220B, 220C, 220D display module, 230a to 230i display units, 240a to 240i first-stage display units, 250a to 250i nth-stage display units, 260a to 260i (n + 1)th-stage display units, 270a to 270i Nth-stage display units, 280a to 280i display units, 290a to 290i first-stage display units, 300a to 300i nth-stage display units, 310a to 310i (n + 1)th-stage display units, 320a to 320i Nth-stage display units,

1000, 1000B, 1000C, 1000D, 2000, 2000B, 2000C, 2000D display apparatus, S analog image signal,

D, D1, D2, D3, Dn, Do, DN, DO, DP, D4, D5, Dn', Do', DN', DO', DP' image data

E, E1, E2, E3, E4, E5, Em, En, Eo, Ep, EM, EN, EO, EP, E6, E7, Em', En', Eo', Ep', EM', EN', EO', EP' image data

I1, Io, Io' device numbers, K2, KO, K4, KO' pixel numbers

**[0019]** P1, P3 first luminance and chrominance conversion parameters, P2 second luminance and chrominance conversion parameters, Po (n + 1)th luminance and chrominance conversion parameters, PO (N + 1)th luminance and chrominance conversion parameters, P4 second luminance conversion parameters, Po' (n + 1)th luminance conversion parameters, PO' (N + 1)th luminance conversion parameters

BEST MODE OF PRACTICING THE INVENTION

Embodiments of the invention will now be described with reference to the drawings.

First Embodiment

(A) Structure of the Display Apparatus 1000

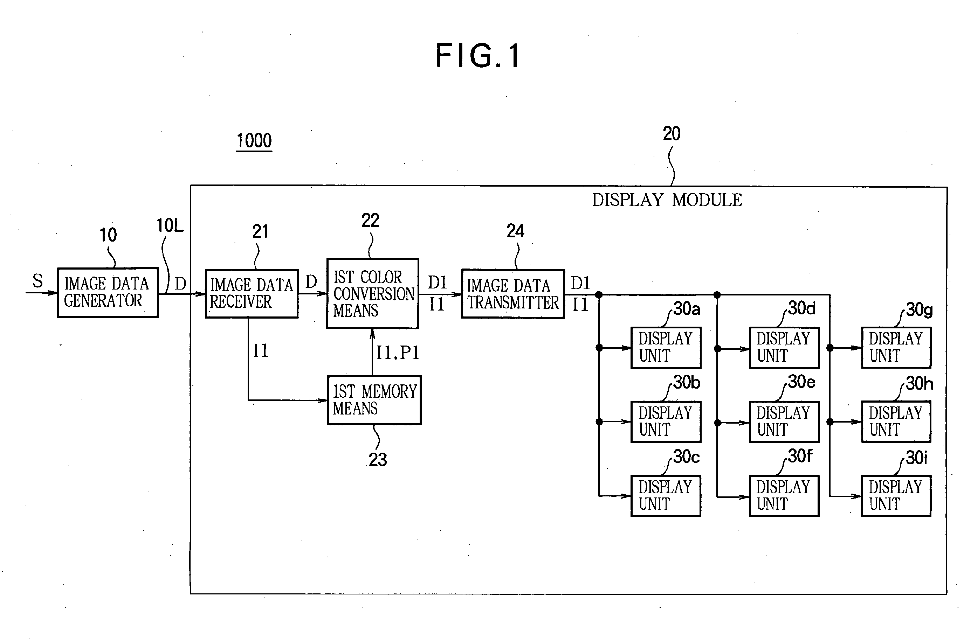

FIG. 1 is a schematic block diagram showing a display apparatus 1000 in a first embodiment of the invention.

The display apparatus 1000 shown in FIG. 1 comprises a display module 20 and an image data generator 10 disposed external to the display module 20.

The display module 20 comprises display units 30a to 30i arranged in, for example, a matrix array, an image data receiver 21 disposed external to the display units 30a to 30i, a first color conversion means 22, a first memory means 23, and an image data transmitter 24.

In the illustrated example, there are nine display units 30a to 30i arranged in a three-by-three matrix, but the number of rows and the number of columns may differ from three, and the number of rows may differ from the number of columns.

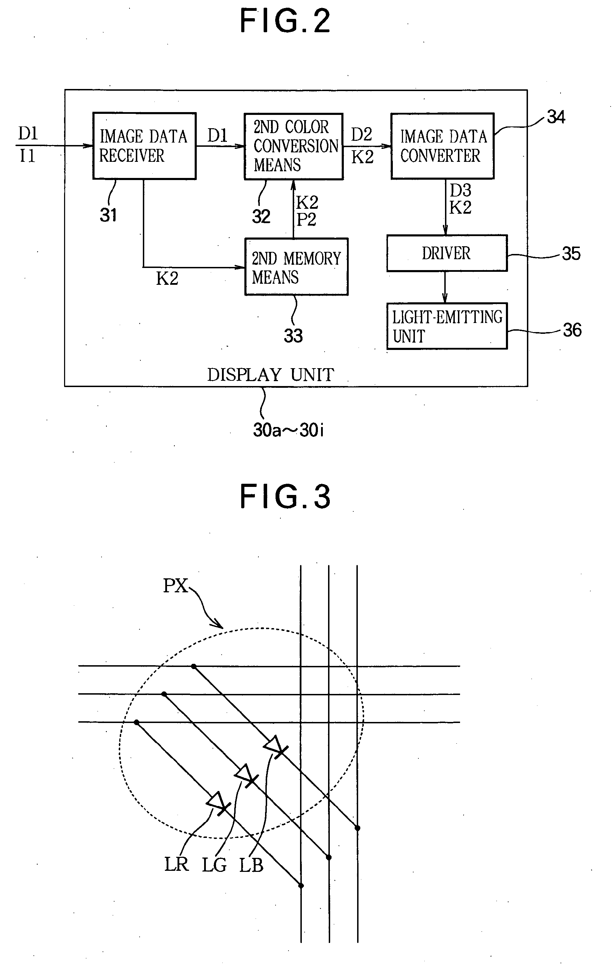

Each of the display units 30a to 30i has the same structure, comprising, as shown in FIG. 2, an image data receiver 31, a second color conversion means 32, a second memory means 33, an image data converter 34, a driver 35, and a light-emitting unit 36.

The light-emitting unit 36 comprises a plurality of pixels arranged in a matrix, each pixel comprising a plurality of light-emitting elements of different chromaticity. Each pixel comprises, for example, one red light-emitting element, one green light-emitting element, and one blue light-emitting element. Each light-emitting element comprises, for example, a light-emitting diode (LED). The invention can also be practiced in a configuration in which each pixel consists of a single light-emitting element instead of a configuration in which each pixel comprises a plurality of light-emitting elements.

The display units 30a to 30i generate the display light of the display apparatus 1000.

FIG. 3 shows an example of a pixel PX comprising red, green, and blue light-emitting diodes LR, LG, LB.

A plurality of the illustrated pixels are arranged in, for example, a matrix; each pixel is made to display the desired color by adjusting the current flowing through its different-colored LEDs.

The first color conversion means 22 shown in FIG. 1 performs luminance and chrominance conversions for the purpose of eliminating luminance and chrominance variations occurring between different display units 30a to 30i; information including the parameters (first luminance and chrominance conversion parameters) P1 for the color conversion (luminance and chrominance conversion) performed by the first color conversion means 22 is stored in the first memory means 23. The first color conversion parameters P1 are determined for each display unit on the basis of information about the display characteristics of the display units 30a to 30i for the purpose of eliminating luminance and chrominance variations occurring between different display units 30a to 30i.

The second color conversion means 32 shown in FIG. 2 performs luminance and chrominance conversions for the purpose of eliminating variations in luminance and chrominance occurring within each of the display units 30a to 30i; information including the parameters (second luminance and chrominance conversion parameters) P2 for the color conversion (luminance and chrominance conversion) performed by the second color conversion means 32 is stored in the second memory means 33. The second color conversion parameters P2 are determined for each display unit on the basis of information about the color characteristics of its light-emitting elements for the purpose of eliminating luminance and chrominance variations occurring within the display units 30a to 30i.

The image data receiver 21 receives image data D supplied through a transmission line 10L from the image data generator 10, passes the data to the first color conversion means 22, and sends display unit device numbers I1, which are generated in the image data receiver 21, to the first memory means 23.

The first color conversion means 22 receives the image data D, and also receives the display unit device numbers I1 and the corresponding first luminance and chrominance conversion parameters P1, which are sent by the first memory means 23.

The first color conversion means 22 converts the luminance and chrominance of the image data D according to the first luminance and chrominance conversion parameters P1, and outputs the converted image data (also referred to as the 'first color-converted image data') D1 and the display unit device numbers I1 to the image data transmitter 24.

The image data transmitter 24 sends the image data D to the display units 30a to 30i designated by the display unit device numbers I1.

Conversion of the image data D to image data D1 by use of the first luminance and chrominance conversion parameters P1 makes it possible to eliminate luminance and chrominance variations between different display units 30a to 30i that were present when the image data D were output to the display module 20. The first luminance and chrominance conversion parameters P1 stored in the first memory means 23 are organized so as to be switchable according to the display unit device numbers I1.

The image data receiver 31 in the one of the display units 30a to 30i that corresponds to the display unit device number I1 receives the image data D1, passes the data to the second color conversion means 32, and sends the second memory means 33 pixel numbers K2, which are generated in the image data receiver 31 and designate pixels in the light-emitting unit 36. The second color conversion means 32 receives the image data D1, and receives the pixel numbers of the pixels in the light-emitting unit 36 and the corresponding second luminance and chrominance conversion parameters P2, which are sent by the second memory means 33. The second color conversion means 32 converts the luminance and chrominance of the image data D1 according to the second luminance and chrominance conversion parameters P2, and outputs the converted image data (also referred to as the 'second color-converted image data') D2 and the pixel numbers K2 of pixels in the light-emitting unit 36. The image data converter 34 receives the image data D2 and the pixel numbers K2 of pixels in the light-emitting unit 36, converts the image data D2 to driving signals D3 suited for the light-emitting elements (in this case, LEDs) in the light-emitting unit 36, and outputs these signals and the pixel numbers K2 of the pixels in the light-emitting unit 36. The driver 35 drives the light-emitting elements in the light-emitting unit 36 corresponding to the pixel numbers K2 of the pixels in the light-emitting unit 36 according to the driving signals D3.

Conversion of image data D1 to image data D2 by use of the second luminance and chrominance conversion parameters P2 makes it possible to eliminate luminance and chrominance variations within the display units 30a to 30i that were present when the image data D1 were output to the display units 30a to 30i. The second luminance and chrominance conversion parameters P1 stored in the second memory means 33 are organized so as to be switchable according to the pixel numbers K2 of the pixels in the light-emitting unit 36.

Because a second color conversion means 32 is provided in each of the display units 30a to 30i as described above, when one of the display units 30a to 30i is replaced, it is possible to readjust the chromaticity of the display apparatus 1000 just by rewriting the first luminance and chrominance conversion parameters P1 and the second luminance and chrominance conversion parameters P2 provided in the replaced display unit (one of 30a to 30i).

(A-1) Structure of the Image Data Generator 10

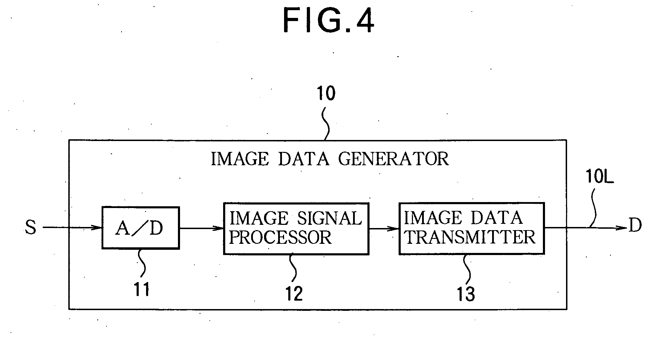

FIG. 4 schematically shows the structure of the image data generator 10. The image data generator 10 comprises an analog-to-digital converter (referred to as an 'A/D converter' below and denoted 'A/D' in the drawings) 11, an image signal processor 12, and an image data transmitter 13.

The analog image signal S input to the image data generator 10 is first converted to a digital signal by the A/D converter 11. The image signal processor 12 performs digital signal processing, such as gamma correction and resolution conversion, matched to the characteristics of the input signal or the characteristics of the display units 30a to 30i, on the digitized image data. The image data transmitter 13 then sends the image data D over the transmission line 10L to the display module 20.

(B) Method of Luminance and Chrominance Conversion in the Second Color Conversion Means 32.

Image data D2, expressed as a $3 \times 1$ matrix, are derived from image data D1, likewise expressed as a $3 \times 1$ matrix, by means of a $3 \times 3$ matrix $H_2$ as shown in equation (1). In equation (1), $R_1$ is the red signal value in image data D1, $G_1$ is the green signal value in image data D1, and $B_1$ is the blue signal value in image data D1; $R_2$ is the red signal value in image data D2, $G_2$ is the green signal value in image data D2, and $B_2$ is the blue signal value in image data D2.

$$\begin{pmatrix} R_2 \\ G_2 \\ B_2 \end{pmatrix} = H_2 \begin{pmatrix} R_1 \\ G_1 \\ B_1 \end{pmatrix} \qquad (1)$$

(C) Method of Setting the Second Luminance and Chrominance Conversion Parameters P2

To convert the image data by the $3 \times 3$ matrix $H_2$ in equation (1), it is necessary to express the second luminance and chrominance conversion parameters P2 by the $3 \times 3$ matrix $H_2$. Values are set by the method described below.

The $3 \times 3$ matrix $H_2$ is set as in equation (2). In equation (2), $X_{Rmeas}$, $Y_{Rmeas}$, and $Z_{Rmeas}$ are measured tristimulus values when the maximum amount of light is emitted by a red light-emitting element in the light-emitting unit 36 and the amount of light emitted by the green and blue light-emitting elements is zero, $X_{Gmeas}$, $Y_{Gmeas}$, and $Z_{Gmeas}$ are measured tristimulus values when the maximum amount of light is emitted by a green light-emitting element in the light-emitting unit 36 and the amount of light emitted by the red and blue light-emitting elements is zero, $X_{Bmeas}$, $Y_{Bmeas}$, and $Z_{Bmeas}$ are measured tristimulus values when the maximum amount of light is emitted by a blue light-emitting element in the light-emitting unit 36 and the amount of light emitted by the red and green light-emitting elements is zero, $X_{Rtarget2}$, $Y_{Rtarget2}$, and $Z_{Rtarget2}$ are the tristimulus values of the target red color in the display units 30a to 30i, $X_{Gtarget2}$, $Y_{Gtarget2}$, and $Z_{Gtarget2}$ are the tristimulus values of the target green color in the display units 30a to 30i, and $X_{Btarget2}$, $Y_{Btarget2}$, and $Z_{Btarget2}$ are the tristimulus values of the target blue color in the display units 30a to 30i.

$$H_2 = \begin{pmatrix} X_{Rmeas} & X_{Gmeas} & X_{Bmeas} \\ Y_{Rmeas} & Y_{Gmeas} & Y_{Bmeas} \\ Z_{Rmeas} & Z_{Gmeas} & Z_{Bmeas} \end{pmatrix}^{-1} \begin{pmatrix} X_{Rt\arg et2} & X_{Gt\arg et2} & X_{Bt\arg et2} \\ Y_{Rt\arg et2} & Y_{Gt\arg et2} & Y_{Bt\arg et2} \\ Z_{Rt\arg et2} & Z_{Gt\arg et2} & Z_{Bt\arg et2} \end{pmatrix} \qquad (2)$$

The values of $X_{Rmeas}$, $Y_{Rmeas}$, $Z_{Rmeas}$, $X_{Gmeas}$, $Y_{Gmeas}$, $Z_{Gmeas}$, $X_{Bmeas}$, $Y_{Bmeas}$, and $Z_{Bmeas}$ in equation (2) differ for each pixel number K2 in the light-emitting unit 36. The second luminance and chrominance conversion parameters P2 therefore form a different matrix for each pixel number in the light-emitting unit 36, so it is necessary to switch the second luminance and chrominance conversion parameters P2 for each pixel number K2 in the light-emitting unit 36.

(D) Method of Converting Luminance and Chrominance in the First Color Conversion Means 22.

Image data D1, expressed as a $3 \times 1$ matrix, are derived from image data D, likewise expressed as a $3 \times 1$ matrix, by means of a $3 \times 3$ matrix $H_1$ as shown in equation (3). In equation (3), $R_0$ is the red signal value in image data D, $G_0$ is the green signal value in image data D, and $B_0$ is the blue signal value in image data D; $R_1$ is the red signal value in image data D1, $G_1$ is the green signal value in image data D1, and $B_1$ is the blue signal value in image data D1.

$$\begin{pmatrix} R_1 \\ G_1 \\ B_1 \end{pmatrix} = H_1 \begin{pmatrix} R_0 \\ G_0 \\ B_0 \end{pmatrix} \qquad (3)$$

(E) Method of Setting the Second Luminance and Chrominance Conversion Parameters P2

To convert the image data by the $3 \times 3$ matrix $H_1$ in equation (3), it is necessary to express the first luminance and chrominance conversion parameters P1 as the $3 \times 3$ matrix $H_1$. Values are set by the method described below.
The $3 \times 3$ matrix $H_1$ is set as in equation (4). In equation (4), $X_{Rtarget2}$, $Y_{Rtarget2}$, and $Z_{Rtarget2}$ are the tristimulus values of the target red color in the display units 30a to 30i, $X_{Gtarget2}$, $Y_{Gtarget2}$, and $Z_{Gtarget2}$ are the tristimulus values of the target green color in the display units 30a to 30i, $X_{Btarget2}$, $Y_{Btarget2}$, and $Z_{Btarget2}$ are the tristimulus values of the target blue color in the display units 30a to 30i, $X_{Rtarget1}$, $Y_{Rtarget1}$, and $Z_{Rtarget1}$ are the tristimulus values of the target red color spanning the display units 30a to 30i, $X_{Gtarget1}$, $Y_{Gtarget1}$, and $Z_{Gtarget1}$ are the tristimulus values of the target green color spanning the display units 30a to 30i, and $X_{Btarget1}$, $Y_{Btarget1}$, and $Z_{Btarget1}$ are the tristimulus values of the target blue color spanning the display units 30a to 30i.

$$H_1 = \begin{pmatrix} X_{Rt\arg et2} & X_{Gt\arg et2} & X_{Bt\arg et2} \\ Y_{Rt\arg et2} & Y_{Gt\arg et2} & Y_{Bt\arg et2} \\ Z_{Rt\arg et2} & Z_{Gt\arg et2} & Z_{Bt\arg et2} \end{pmatrix}^{-1} \begin{pmatrix} X_{Rt\arg et1} & X_{Gt\arg et1} & X_{Bt\arg et1} \\ Y_{Rt\arg et1} & Y_{Gt\arg et1} & Y_{Bt\arg et1} \\ Z_{Rt\arg et1} & Z_{Gt\arg et1} & Z_{Bt\arg et1} \end{pmatrix} \qquad (4)$$

After luminance and chrominance have been converted to eliminate variations between the display units 30a to 30i, the luminance and chrominance within the display units 30a to 30i are converted. The 3 × 3 matrix $H_1$ therefore incorporates the tristimulus values of the target colors within the display units 30a to 30i and the target colors spanning the display units 30a to 30i as shown in equation (4).

The values of $X_{Rtarget2}$, $Y_{Rtarget2}$, $Z_{Rtarget2}$, $X_{Gtarget2}$, $Y_{Gtarget2}$, $Z_{Gtarget2}$, $X_{Btarget2}$, $Y_{Btarget2}$, and $Z_{Btarget2}$ in equation (4) differ for each display unit 30a to 30i. The first luminance and chrominance conversion parameters P1 therefore form a different matrix for each display unit 30a to 30i, making it necessary to switch the first luminance and chrominance conversion parameters P2 for each display unit 30a to 30i.

When one of the display units 30a to 30i, (for example, display unit 30a) is replaced, if the tristimulus values of the target colors spanning the display units 30a to 30i are not changed, then of the first luminance and chrominance conversion parameters P1, only the portion corresponding to the device number I1 of display unit 30a have to be rewritten.

Providing a first color conversion means 22 for the display module 20 and providing second color conversion means 32 in the display units 30a to 30i enables the luminance and chrominance of the entire display module 20 to be adjusted and enables an image with uniform chromaticity over the entire display apparatus 1000 to be obtained.

Providing a second color conversion means 32 in each display unit 30a to 30i enables the chromaticity of the display apparatus 1000 to be readjusted when one of the display units 30a to 30i is replaced just by rewriting the first luminance and chrominance conversion parameters P1 and the second luminance and chrominance conversion parameters P2 provided in the replaced display unit (one of 30a to 30i).

These effects make it possible to adjust the luminance and chrominance of a replacement display unit (for example, 30a) at the factory or in a laboratory, take the display unit (30a) to the installation site and install it in the display module 20, and then adjust the luminance and chrominance of the entire display module 20.

When the display module 20 comprises a plurality of display units 30a to 30i, it becomes possible to adjust the luminance and chrominance of each display unit 30a to 30i with its second color conversion means 32, then combine the display units 30a to 30i and adjust the luminance and chrominance of the entire display module 20, which makes the adjustment of the luminance and chrominance of the entire display module 20 easier than when the luminance and chrominance of the entire display module 20 are adjusted all at once.

These effects make it possible to adjust the luminance and chrominance within the display units 30a to 30i at the factory or in a laboratory, take the display units 30a to 30i to the installation site, assemble the display module 20, and then adjust the luminance and chrominance of the entire display module 20.

Regardless of the number of pixels constituting the light-emitting unit 36 and other factors in the combined configuration of the display units 30a to 30i, the luminance and chrominance of the entire display module 20 can be easily adjusted.

Since the display apparatus in the first embodiment as described above provides a first color conversion means (22) to convert luminance and chrominance for the display module (20), and provides a second color conversion means (32) to convert the luminance and chrominance within a display unit (one of 30a to 30i), when one of the display units 30a to 30i is replaced, the chromaticity of the display apparatus can be readjusted just by rewriting the first luminance and chrominance conversion parameters P1 and the second luminance and chrominance conversion parameters P2 provided in the replaced display unit (one of 30a to 30i).

Second Embodiment

In the display apparatus 1000 in the first embodiment there was one stage of display units 30a to 30i in the display module 20 and second color conversion means 32 were provided in the display units 30a to 30i, but there may be multiple stages of display units, and color conversion means may be provided for the display units in each stage. A specific method will be described below under the assumption that there are N stages of display units (where N is an integer equal to or greater than two). The following description will focus on the differences from the display apparatus 1000 in FIG. 1; constituent elements equivalent to constituent elements that have already been described will have the same reference characters, and the previous descriptions will be referred to.

(A) Structure of the Display Apparatus 1000B

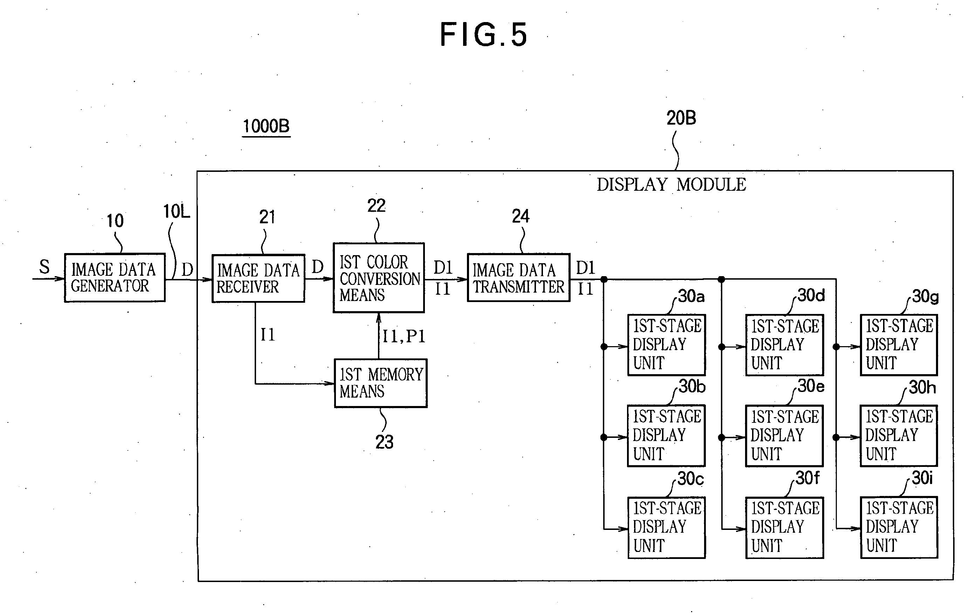

FIG. 5 is a schematic block diagram of the display apparatus 1000B in the second embodiment of the invention. As shown in FIG. 5, the display apparatus 1000B comprises a display module 20B and the above-described image data generator 10. The display module 20B comprises first-stage display units 40a to 40i arranged in, for example, a matrix array, the above-described image data receiver 21, the above-described first color conversion means 22, the above-described first memory means 23, and the above-described image data transmitter 24.

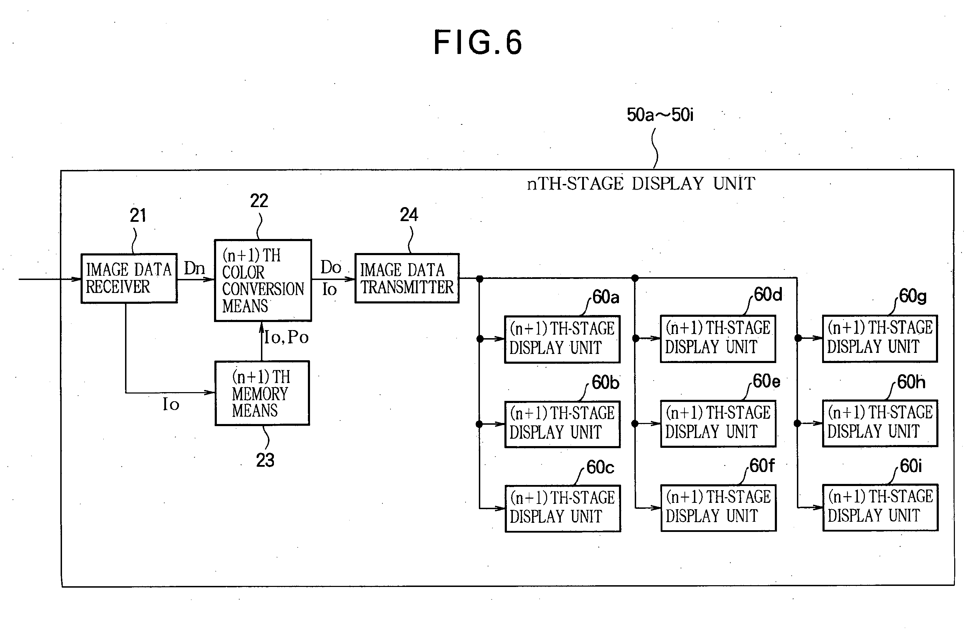

Each of the nth-stage display units 50a to 50i (where n is an integer satisfying 1 ≤ n ≤ N - 1) comprises, as shown in FIG. 6, an image data receiver 41, an (n + 1)th color conversion means 42, an (n + 1)th memory means 43, and an image data transmitter 44. When n = 1, display units 50a to 50i are the same as display units 40a to 40i.

The image data receiver 41 receives image data D supplied from the image data transmitter 24 in FIG. 5 (when n = 1) or image data supplied from the image data transmitter 44 in the corresponding one of the (n - 1)th-stage display units (when n > 1), passes the data to the (n + 1)th color conversion means 42, and sends display unit device numbers Io, which are generated in the image data receiver 41, to the (n + 1)th memory means 43.

The (n + 1)th color conversion means 42 receives the image data Dn, and also receives the display unit device numbers Io and the corresponding (n + 1)th luminance and chrominance conversion parameters Po, which are sent by the (n + 1)th memory means 43. The (n + 1)th color conversion means 42 converts the luminance and chrominance of the image data Dn according to the (n + 1)th luminance and chrominance conversion parameters Po, and outputs the converted image data (also referred to as the '(n + 1)th color-converted image data') and the display unit device numbers Io to the image data transmitter 44.

The image data transmitter 44 sends the image data to the (n + 1)th-stage display units 60a to 60i designated by the display unit device numbers Io.

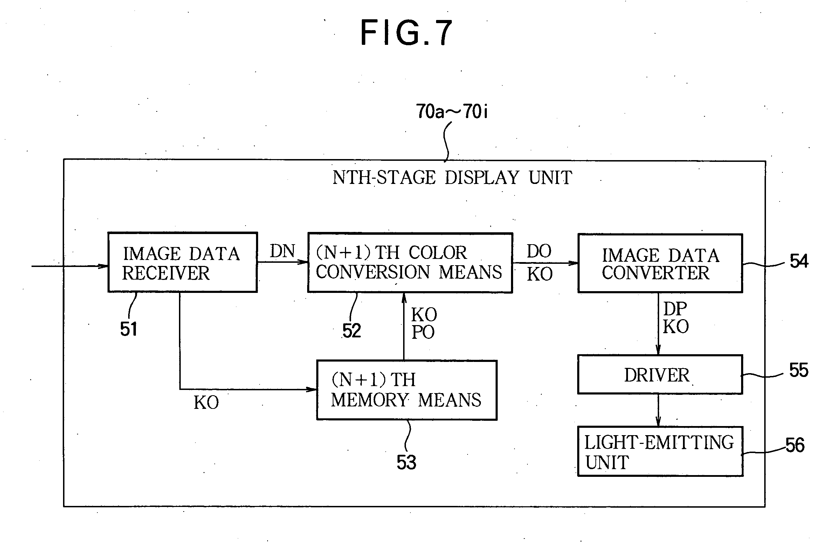

Each of the Nth-stage display units 70a to 70i comprises, as shown in FIG. 7, an image data receiver 51, an (N + 1)th color conversion means 52, an (N + 1)th memory means 53, an image data converter 54, a driver 55, and a light-emitting unit 56.

The image data receiver 51, (N + 1)th color conversion means 52, (N + 1)th memory means 53, image data converter 54, driver 55, and light-emitting unit 56 have substantially the same structure as the image data receiver 31, second color conversion means 32, second memory means 33, image data converter 34, driver 35, and light-emitting unit 36 in FIG. 2.

The image data receiver 51 receives image data DN supplied from the image data transmitter 44 in the corresponding one of display units 50a to 50i (the nth-stage display units shown in FIG. 6 when n = N - 1), passes the data to the (N + 1)th color conversion means 52, and sends the (N + 1)th memory means 53 pixel numbers KO of pixels in the light-emitting unit 56, which are generated in the image data receiver 51.

The (N + 1)th color conversion means 52 receives the image data DN and receives the pixel numbers KO of pixels in the light-emitting unit 56 and the corresponding (N + 1)th luminance and chrominance conversion parameters PO, which are sent by the (N + 1)th memory means 53. The (N + 1)th color conversion means 52 converts the luminance and chrominance of the image data DN according to the (N + 1)th luminance and chrominance conversion parameters PO, and outputs the converted image data (also referred to as the '(N + 1)th color-converted image data') and the pixel numbers KO to the image data converter 54.

The image data converter 54 receives the image data DO and the pixel numbers KO of pixels in the light-emitting unit 56, converts the image data DO to driving signals DP suited for the light-emitting elements (in this case, LEDs) in the light-emitting unit 56, and outputs these signals and the pixel numbers KO of the pixels in the light-emitting unit 56.

The driver 55 drives the light-emitting elements in the light-emitting unit 56 corresponding to the pixel numbers KO of the pixels in the light-emitting unit 36 according to the driving signals DP.

The first color conversion means 22 shown in FIG. 5 performs luminance and chrominance conversions for the purpose of eliminating luminance and chrominance variations occurring between different display units 40a to 40i in the first stage; information including the parameters (first luminance and chrominance conversion parameters) P1 for the color conversion (luminance and chrominance conversion) performed by the first color conversion means 22 is stored in the first memory means 23. The first color conversion parameters P1 are determined for each display unit on the basis of information about the display characteristics of the display units 40a to 40i for the purpose of eliminating luminance and chrominance variations occurring between different display units 40a to 40i in the first stage.

The (n + 1)th color conversion means 42 shown in FIG. 6 performs luminance and chrominance conversions for the purpose of eliminating luminance and chrominance variations occurring between different display units 60a to 60i in the (n + 1)th stage; information including the parameters (the (n + 1)th luminance and chrominance conversion parameters) Po for the color conversion (luminance and chrominance conversion) performed by the (n + 1)th color conversion means 42 is stored in the (n + 1)th memory means 43. The (n + 1)th color conversion parameters Po are determined for each display unit on the basis of information about the display characteristics of the display units 60a to 60i in the (n + 1)th stage for the purpose of eliminating luminance and chrominance variations occurring between different display units 60a to 60i in the (n + 1)th stage.

The (N + 1)th color conversion means 52 shown in FIG. 7 performs luminance and chrominance conversions for the purpose of eliminating variations in luminance and chrominance occurring within each of the display units 70a to 70i in the Nth stage; information including the parameters (the (N + 1)th luminance and chrominance conversion parameters) PO for the color conversion (luminance and chrominance conversion) performed by the (N + 1)th color conversion means 52 is stored in the (N + 1)th memory means 53. The (N + 1)th color conversion parameters PO are determined for each display unit on the basis of information about the color characteristics of its light-emitting elements for the purpose of eliminating luminance and chrominance variations occurring within the display units 70a to 70i in the Nth stage.

(B) Method of Luminance and Chrominance Conversion in the (N + 1)th Color Conversion Means 52.

Image data DO, expressed as a 3 × 1 matrix, are derived from image data DN, likewise expressed as a 3 × 1 matrix, by means of a 3 × 3 matrix $H_{N+1}$ as shown in equation (5). In equation (5), $R_N$ is the red signal value in image data DN, $G_N$ is the green signal value in image data DN, and $B_N$ is the blue signal value in image data DN; $R_{N+1}$ is the red signal value in image data DO, $G_{N+1}$ is the green signal value in image data DO, and $B_{N+1}$ is the blue signal value in image data DO.

$$\begin{pmatrix} R_{N+1} \\ G_{N+1} \\ B_{N+1} \end{pmatrix} = H_{N+1} \begin{pmatrix} R_N \\ G_N \\ B_N \end{pmatrix} \qquad (5)$$

(C) Method of Setting the (N + 1)th Luminance and Chrominance Conversion Parameters PO

To convert the image data by the 3 × 3 matrix $H_{N+1}$ in equation (5), it is necessary to express the second luminance and chrominance conversion parameters PO by the 3 × 3 matrix $H_{N+1}$. Values are set by the method described below.

The 3 × 3 matrix $H_{N+1}$ is set as in equation (6). In equation (6), $X_{Rmeas}$, $Y_{Rmeas}$, and $Z_{Rmeas}$ are measured tristimulus values when the maximum amount of light is emitted by a red light-emitting element in the light-emitting unit 56 and the amount of light emitted by the green and blue light-emitting elements is zero, $X_{Gmeas}$, $Y_{Gmeas}$, and $Z_{Gmeas}$ are measured tristimulus values when the maximum amount of light is emitted by a green light-emitting element in the light-emitting unit 56 and the amount of light emitted by the red and blue light-emitting elements is zero, $X_{Bmeas}$, $Y_{Bmeas}$, and $Z_{Bmeas}$ are measured tristimulus values when the maximum amount of light is emitted by a blue light-emitting element in the light-emitting unit 56 and the amount of light emitted by the red and green light-emitting elements is zero, $X_{RtargetN+1}$, $Y_{RtargetN+1}$, and $Z_{RtargetN+1}$ are the tristimulus values of the target red color in the display units 70a to 70i in the Nth stage, $X_{GtargetN+1}$, $Y_{GtargetN+1}$, and $Z_{GtargetN+1}$ are the tristimulus values of the target green color in the display units 70a to 70i in the Nth stage, and $X_{BtargetN+1}$, $Y_{BtargetN+1}$, and $Z_{BtargetN+1}$ are the tristimulus values of the target blue color in the display units 70a to 70i in the Nth stage.

$$H_{N+1} = \begin{pmatrix} X_{Rmeas} & X_{Gmeas} & X_{Bmeas} \\ Y_{Rmeas} & Y_{Gmeas} & Y_{Bmeas} \\ Z_{Rmeas} & Z_{Gmeas} & Z_{Bmeas} \end{pmatrix}^{-1} \begin{pmatrix} X_{Rt\arg etN+1} & X_{Gt\arg etN+1} & X_{Bt\arg etN+1} \\ Y_{Rt\arg etN+1} & Y_{Gt\arg etN+1} & Y_{Bt\arg etN+1} \\ Z_{Rt\arg etN+1} & Z_{Gt\arg etN+1} & Z_{Bt\arg etN+1} \end{pmatrix} \qquad (6)$$

The values of $X_{Rmeas}$, $Y_{Rmeas}$, $Z_{Rmeas}$, $X_{Gmeas}$, $Y_{Gmeas}$, $Z_{Gmeas}$, $X_{Bmeas}$, $Y_{Bmeas}$, and $Z_{Bmeas}$ in equation (6) differ for each pixel number KO in the light-emitting unit 56. The (N + 1)th luminance and chrominance conversion parameters PO therefore form a different matrix for each pixel number in the light-emitting unit 56, so it is necessary to switch the (N + 1)th luminance and chrominance conversion parameters PO for each pixel number KO in the light-emitting unit 56.

(D) Method of Converting Luminance and Chrominance in the (n + 1)th Color Conversion Means 42.

Image data D1, expressed as a 3 × 1 matrix, are derived from image data D, likewise expressed as a 3 × 1 matrix, by means of a 3 × 3 matrix $H_1$ as shown in equation (7). In equation (7), $R_n$ is the red signal value in image data Dn, $G_n$ is the green signal value in image data Dn, and $B_n$ is the blue signal value in image data Dn; $R_{n+1}$ is the red signal value in image data Do, $G_{n+1}$ is the green signal value in image, data Do, and $B_{n+1}$ is the blue signal value in image data Do.

$$\begin{pmatrix} R_{n+1} \\ G_{n+1} \\ B_{n+1} \end{pmatrix} = H_{n+1} \begin{pmatrix} R_n \\ G_n \\ B_n \end{pmatrix} \qquad (7)$$

(E) Method of Setting the (n + 1)th Luminance and Chrominance Conversion Parameters Po

To convert the image data by the $3 \times 3$ matrix $H_{n+1}$ in equation (7), it is necessary to express the (n + 1)th luminance and chrominance conversion parameters Po as the $3 \times 3$ matrix $H_{n+1}$. Values are set by the method described below.

The $3 \times 3$ matrix $H_{n+1}$ is set as in equation (8). In equation (8), $X_{Rtargetn+2}$, $Y_{Rtargetn+2}$, and $Z_{Rtargetn+2}$ are the tristimulus values of the target red color in the display units 60a to 60i in the (n + 1)th stage, $X_{Gtargetn+2}$, $Y_{Gtargetn+2}$, and $Z_{Gtargetn+2}$ are the tristimulus values of the target green color in the display units 60a to 60i in the (n + 1)th stage, $X_{Btargetn+2}$, $Y_{Btargetn+2}$, and $Z_{Btargetn+2}$ are the tristimulus values of the target blue color in the display units 60a to 60i in the (n + 1)th stage, $X_{Rtargetn+1}$, $Y_{Rtargetn+1}$, and $Z_{Rtargetn+1}$ are the tristimulus values of the target red color spanning the display units 60a to 60i in the (n + 1) th stage, $X_{Gtargetn+1}$, $Y_{Gtargetn+1}$, and $Z_{Gtargetn+1}$ are the tristimulus values of the target green color spanning the display units 60a to 60i in the (n + 1) th stage, and $X_{Btargetn+1}$, $Y_{Btargetn+1}$, and $Z_{Btargetn+1}$ are the tristimulus values of the target blue color spanning the display units 60a to 60i in the (n + 1)th stage.

$$H_{N+1} = \begin{pmatrix} X_{Rt\,arg\,etn+2} & X_{Gt\,arg\,etn+2} & X_{Bt\,arg\,etn+2} \\ Y_{Rt\,arg\,etn+2} & Y_{Gt\,arg\,etn+2} & Y_{Bt\,arg\,etn+2} \\ Z_{Rt\,arg\,etn+2} & Z_{Gt\,arg\,etn+2} & Z_{Bt\,arg\,etn+2} \end{pmatrix}^{-1} \begin{pmatrix} X_{Rt\,arg\,etn+1} & X_{Gt\,arg\,etn+1} & X_{Bt\,arg\,etn+1} \\ Y_{Rt\,arg\,etn+1} & Y_{Gt\,arg\,etn+1} & Y_{Bt\,arg\,etn+1} \\ Z_{Rt\,arg\,etn+1} & Z_{Gt\,arg\,etn+1} & Z_{Bt\,arg\,etn+1} \end{pmatrix} \qquad (8)$$

After luminance and chrominance have been converted to eliminate differences between the display units 60a to 60i in the (n + 1)th stage, the luminance and chrominance within the display units 60a to 60i in the (n + 1)th stage are converted. The $3 \times 3$ matrix $H_{n+1}$ therefore incorporates the tristimulus values of the target colors within the display units 60a to 60i in the (n + 1)th stage and the target colors spanning the display units 60a to 60i in the (n + 1)th stage as shown in equation (8).

The values of $X_{Rtargetn+2}$, $Y_{Rtargetn+2}$, $Z_{Rtargetn+2}$, $X_{Gtargetn+2}$, $Y_{Gtargetn+2}$, $Z_{Gtargetn+2}$, $X_{Btargetn+2}$, $Y_{Btargetn+2}$, and $Z_{Btargetn+2}$ in equation (8) differ for each display unit 60a to 60i in the (n + 1)th stage. The (n + 1) luminance and chrominance conversion parameters Po therefore form a different matrix for each of the display units 60a to 60i in the (n + 1)th stage, making it necessary to switch the (n + 1)th luminance and chrominance conversion parameters Po for each of the (n + 1)th-stage display units 60a to 60i.

Since the display apparatus in the second embodiment provides a first color conversion means to convert luminance and chrominance for the display module as described above, and provides further color conversion means to convert luminance and chrominance for the display units in each of the multiple stages present in the display module, when a display unit in the nth stage is replaced, the chromaticity of the display apparatus can be readjusted just by rewriting the nth luminance and chrominance conversion parameters and the luminance and chrominance conversion parameters provided in the replaced nth-stage display unit.

Third Embodiment

The second color conversion means 32 provided in the display units 30a to 30i in the display apparatus 1000 in the first embodiment performed a luminance and chrominance conversion, but second color conversion means 37 that perform a luminance conversion without performing a chrominance conversion may be provided instead.

That is, a structure in which only luminance is converted in the display units 30a to 30i is also possible. A specific method will be described below.

(A) Structure of the Display Apparatus 1000C

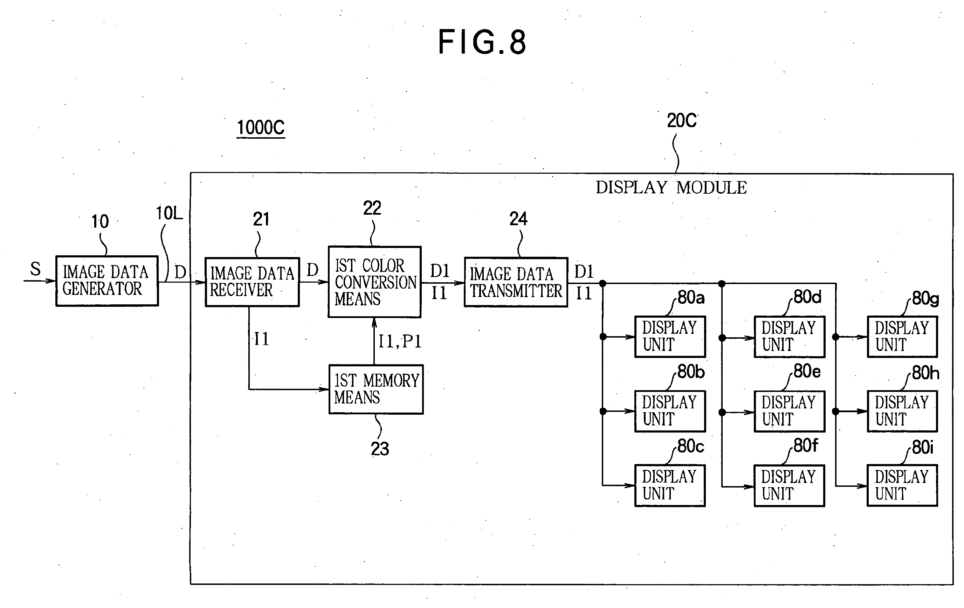

FIG. 8 is a schematic block diagram of the display apparatus 1000C in the third embodiment of the invention. As shown in FIG. 8, the display apparatus 1000C comprises a display module 20C and the above-described image data generator 10. The display module 20C comprises display units 80a to 80i arranged in, for example, a matrix array, the above-described image data receiver 21, the above-described first color conversion means 22, the above-described first memory means 23, and the above-described image data transmitter 24.

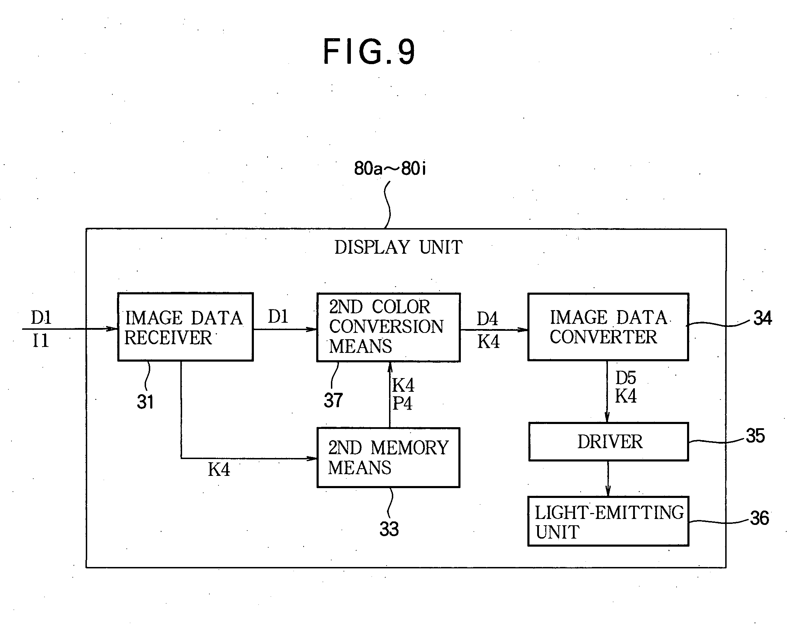

Each of the display units 80a to 80i is structured as shown in FIG. 9. The display unit shown in the drawing is similar to the display units (30a to 30i) shown in FIG. 2, but has a second color conversion means 37 in place of the second color conversion means 32.

The first color conversion means 22 shown in FIG. 8 performs luminance and chrominance conversions for the purpose of eliminating luminance and chrominance variations occurring between different display units 80a to 80i; information including the parameters (first luminance and chrominance conversion parameters) P3 for the color conversion (luminance and chrominance conversion) performed by the first color conversion means 22 is stored in the first memory means 23. The first color conversion parameters P3 are determined for each display unit on the basis of information about the display characteristics of the display units 80a to 80i for the purpose of eliminating luminance and chrominance variations occurring between different display units 80a to 80i.

The second color conversion means 37 shown in FIG. 9 performs only luminance conversions for the purpose of eliminating variations in luminance occurring within each of the display units 80a to 80i; information including the parameters (second luminance conversion parameters) P4 for the color conversion (luminance conversion) performed by the second color conversion means 37 is stored in the second memory means 33. The second luminance conversion parameters P4 are determined for each display unit on the basis of information about the color characteristics of its light-emitting elements for the purpose of eliminating luminance variations occurring within the display units 80a to 80i.

The image data receiver 31 in the one of the display units 80a to 80i that corresponds to the display unit device number I1 receives the image data D1, passes the data to the second color conversion means 37, and sends the second memory means 33 pixel numbers K4, which are generated in the image data receiver 31 and designate pixels in the light-emitting unit 36. The second color conversion means 37 receives the image data D1, and receives the pixel number K4 of the pixels in the light-emitting unit 36 and the corresponding second luminance conversion parameters P4, which are sent by the second memory means 33. The second color conversion means 37 converts the luminance of the image data D1 according to the second luminance conversion parameters P4, and outputs the converted image data (also referred to as the 'second color-converted image data') D4 and the pixel numbers K4 of pixels in the light-emitting unit 36. The image data converter 34 receives the image data D4 and the pixel numbers K4 of pixels in the light-emitting unit 36, converts the image data D4 to driving signals D5 suited for the light-emitting elements (in this case, LEDs) in the light-emitting unit 36, and outputs these signals and the pixel numbers K4 of the pixels in the light-emitting unit 36. The driver 35 drives the light-emitting elements in the light-emitting unit 36 corresponding to the pixel numbers K4 of the pixels in the light-emitting unit 36 according to the driving signals D5.

Conversion of image data D1 to image data D4 by use of the second luminance conversion parameters P4 makes it possible to eliminate luminance variations within the display units 80a to 80i that were present when the image data D1 were output to the display units 80a to 80i. In order to eliminate these variations, the second luminance conversion parameters P4 include the target luminance value of the image data D4 at the time of output to the display units 80a to 80i. The second luminance conversion parameters P4 stored in the second memory means 33 are organized so as to be switchable according to the pixel numbers K2 of the pixels in the light-emitting unit 36.

Because a second color conversion means 37 is provided in each of the display units 80a to 80i as described above, when one of the display units 80a to 80i is replaced, it is possible to readjust the chromaticity of the display apparatus 1000C just by rewriting the first luminance and chrominance conversion parameters P1 and the second luminance conversion parameters P4 provided in the replaced display unit (one of 80a to 80i).

(B) Method of Luminance Conversion in the Second Color Conversion Means 37.

Image data D4, expressed as a $3 \times 1$ matrix, are derived from image data D1, likewise expressed as a $3 \times 1$ matrix, by means of a $3 \times 3$ matrix $H_4$ as shown in equation (9). In equation (9), $R_1$ is the red signal value in image data D1, $G_1$ is the green signal value in image data D1, and $B_1$ is the blue signal value in image data D1; $R_4$ is the red signal value in image data D4, $G_4$ is the green signal value in image data D4, and $B_4$ is the blue signal value in image data D4.

$$\begin{pmatrix} R_4 \\ G_4 \\ B_4 \end{pmatrix} = H_4 \begin{pmatrix} R_1 \\ G_1 \\ B_1 \end{pmatrix} \qquad (9)$$

(C) Method of Setting the Second Luminance Conversion Parameters P4

To convert the image data by the $3 \times 3$ matrix $H_4$ in equation (9), it is necessary to express the second luminance conversion parameters P4 by the $3 \times 3$ matrix $H_4$. Values are set by the method described below.

The $3 \times 3$ matrix $H_4$ is set as in equation (10). In equation (10), $Y_{Rmeas}$ is the measured luminance when the maximum amount of light is emitted by a red light-emitting element in the light-emitting unit 36 and the amount of light emitted by the green and blue light-emitting elements is zero, $Y_{Gmeas}$ is the measured luminance when the maximum amount of light is emitted by a green light-emitting element in the light-emitting unit 36 and the amount of light emitted by the red and blue light-emitting elements is zero, $Y_{Bmeas}$ is the measured luminance when the maximum amount of light is emitted by a blue light-emitting element in the light-emitting unit 36 and the amount of light emitted by the red and green light-emitting elements is zero, $Y_{Rtarget4}$ is the luminance of the target red color in the display units 80a to 80i, $Y_{Gtarget4}$ is the luminance of the target green color in the display units 80a to 80i, and $Y_{Btarget4}$ is the luminance of the target blue color in the display units 80a to 80i.

$$H_4 = \begin{pmatrix} \dfrac{Y_{Rt\,arg\,et4}}{Y_{Rmeas}} & 0 & 0 \\ 0 & \dfrac{Y_{Gt\,arg\,et4}}{Y_{Gmeas}} & 0 \\ 0 & 0 & \dfrac{Y_{Bt\,arg\,et4}}{Y_{Bmeas}} \end{pmatrix} \qquad (1\,0)$$

The values of $Y_{Rmeas}$, $Y_{Gmeas}$, and $Y_{Bmeas}$ in equation (10) differ for each pixel number K4 in the light-emitting unit 36. The second luminance conversion parameters P4 therefore form a different matrix for each pixel number in the light-emitting unit 36, so it is necessary to switch the second luminance conversion parameters P4 for each pixel number K4 in the light-emitting unit 36.

The values of $Y_{Rtarget4}$, $Y_{Rtarget4}$, and $Y_{Rtarget4}$ can be set to the minimum of the values $Y_{Rmeas}$, $Y_{Rmeas}$, and $Y_{Rmeas}$ of all the light-emitting elements in the light-emitting unit 36.

(D) Method of Converting Luminance and Chrominance in the First Color Conversion Means 22

Image data D1, expressed as a $3 \times 1$ matrix, are derived from image data D, likewise expressed as a $3 \times 1$ matrix, by means of a $3 \times 3$ matrix $H_3$ as shown in equation (11). In equation (11), $R_0$ is the red signal value in image data D, $G_0$ is the green signal value in image data D, and $B_0$ is the blue signal value in image data D; $R_1$ is the red signal value in image data D1, $G_1$ is the green signal value in image data D1, and $B_1$ is the blue signal value in image data D1.

$$\begin{pmatrix} R_1 \\ G_1 \\ B_1 \end{pmatrix} = H_3 \begin{pmatrix} R_0 \\ G_0 \\ B_0 \end{pmatrix} \qquad (1\,1)$$

(E) Method of Setting the First Luminance and Chrominance Conversion Parameters P3

To convert the image data by the $3 \times 3$ matrix $H_3$ in equation (11), it is necessary to express the first luminance and chrominance conversion parameters P3 as the $3 \times 3$ matrix $H_3$. Values are set by the method described below.

The $3 \times 3$ matrix $H_3$ is set as in equation (12). In equation (12), $X_{Rtarget4}$, $Y_{Rtarget4}$, and $Z_{Rtarget4}$ are the tristimulus values of the target red color in the display units 80a to 80i, $X_{Gtarget4}$, $Y_{Gtarget4}$, and $Z_{Gtarget4}$ are the tristimulus values of the target green color in the display units 80a to 80i, $X_{Btarget4}$, $Y_{Btarget4}$, and $Z_{Btarget4}$ are the tristimulus values of the target blue color in the display units 80a to 80i, $X_{Rtarget1}$, $Y_{Rtarget1}$, and $Z_{Rtarget1}$ are the tristimulus values of the target red color spanning the display units 80a to 80i, $X_{Gtarget1}$, $Y_{Gtarget1}$, and $Z_{Gtarget1}$ are the tristimulus values of the target green color spanning the display units 80a to 80i, and $X_{Btarget1}$, $Y_{Btarget1}$, and $Z_{Btarget1}$ are the tristimulus values of the target blue color spanning the display units 80a to 80i.

$$H_3 = \begin{pmatrix} X_{Rt\arg et4} & X_{Gt\arg et4} & X_{Bt\arg et4} \\ Y_{Rt\arg et4} & Y_{Gt\arg et4} & Y_{Bt\arg et4} \\ Z_{Rt\arg et4} & Z_{Gt\arg et4} & Z_{Bt\arg et4} \end{pmatrix}^{-1} \begin{pmatrix} X_{Rt\arg et1} & X_{Gt\arg et1} & X_{Bt\arg et1} \\ Y_{Rt\arg et1} & Y_{Gt\arg et1} & Y_{Bt\arg et1} \\ Z_{Rt\arg et1} & Z_{Gt\arg et1} & Z_{Bt\arg et1} \end{pmatrix} \quad (12)$$

After luminance and chrominance have been converted for the different the display units 80a to 80i, the luminance and chrominance within the display units 80a to 80i are converted. The 3 × 3 matrix $H_3$ therefore incorporates the tristimulus values of the target colors within the display units 80a to 80i and the target colors spanning the display units 80a to 80i as shown in equation (12).

The values of $X_{Rtarget4}$, $Y_{Rtarget4}$, $Z_{Rtarget4}$, $X_{Gtarget4}$, $Y_{Gtarget4}$, $Z_{Gtarget4}$, $X_{Btarget4}$, $Y_{Btarget4}$, and $Z_{Btarget4}$ in equation (12) differ for each display unit 80a to 80i. The first luminance and chrominance conversion parameters P3 therefore form a different matrix for each display unit 80a to 80i, making it necessary to switch the first luminance and chrominance conversion parameters P3 for each display unit 80a to 80i.

When one of the display units 80a to 80i, (for example, display unit 80a) is replaced, if the tristimulus values of the target colors spanning the display units 80a to 80i are not changed, then of the first luminance and chrominance conversion parameters P3, only the portion corresponding to the device number I1 of display unit 80a have to be rewritten.

The tristimulus values of the target colors in the display units 80a to 80i can be set by, for example, the method described below.

First, the minimum $Y_{Rmeas}$, $Y_{Rmeas}$, and $Y_{Rmeas}$ values of all the light-emitting elements in the light-emitting unit 36 are set as the values of $Y_{Rtarget4}$, $Y_{Rtarget4}$, and $Y_{Rtarget4}$, as explained above.

Next, the mean chrominance values $x_{Rmeas}$, $y_{Rmeas}$ measured when the red light-emitting elements in the light-emitting unit 36 emit the maximum amount of light and the amount of light emitted by the green and blue light-emitting elements is zero are set as the chrominance values $x_{Rtarget4}$, $y_{Rtarget4}$ of the target red color in the display units 80a to 80i.

The mean chrominance values $x_{Gmeas}$, $y_{Gmeas}$ measured when the green light-emitting elements in the light-emitting unit 36 emit the maximum amount of light and the amount of light emitted by the red and blue light-emitting elements is zero are set as the chrominance values $x_{Gtarget4}$, $y_{Gtarget4}$ of the target green color in the display units 80a to 80i. The mean chrominance values $x_{Bmeas}$, $y_{Bmeas}$ measured when the blue light-emitting elements in the light-emitting unit 36 emit the maximum amount of light and the amount of light emitted by the red and green light-emitting elements is zero are set as the chrominance values $x_{Btarget4}$, $y_{Btarget4}$ of the target blue color in the display units 80a to 80i.

Finally, $X_{Rtarget4}$, $Z_{Rtarget4}$, $X_{Gtarget4}$, $Z_{Gtarget4}$, $X_{Btarget4}$, and $Z_{Btarget4}$ are derived from equation (13).

$$X_{Ct\arg et4} = \frac{x_{Ct\arg et4}}{y_{Ct\arg et4}} Y_{Ct\arg et4}$$

$$Z_{Ct\arg et4} = \frac{1 - x_{Ct\arg et4} - y_{Ct\arg et4}}{y_{Ct\arg et4}} Y_{Ct\arg et4} \quad (13)$$

$$(C = R, G, B)$$

Providing a first color conversion means 22 for the display module 20C and providing second color conversion means 37 in the display units 80a to 80i enables the luminance and chrominance of the entire display module 20C to be adjusted and enables an image with uniform chromaticity over the entire display apparatus 1000C to be obtained.

Providing a second color conversion means 37 in each display unit 80a to 80i enables the chromaticity of the display apparatus 1000C to be readjusted when one of the display units 80a to 80i (e.g., 80a) is replaced just by rewriting the first luminance and chrominance conversion parameters P1 and the second luminance conversion parameters P4 provided in the replaced display unit (80a).

These effects make it possible to adjust the luminance of a replacement display unit (for example, 80a) at the factory or in a laboratory, take the display unit (80a) to the installation site and install it in the display module 20C, and then adjust the luminance and chrominance of the entire display module 20C.

When the display module 20C comprises a plurality of display units 80a to 80i, it becomes possible to adjust the luminance of each display unit 80a to 80i with the second color conversion means 37, then combine the display units 80a to 80i and adjust the luminance and chrominance of the entire display module 20C with the first color conversion means 22, which makes the adjustment of the luminance and chrominance of the entire display module 20C easier than when the luminance and chrominance of the entire display module 20C are adjusted all at once.

These effects make it possible to adjust the luminance within the display units 80a to 80i at the factory or in a laboratory, take the display units 80a to 80i to the installation site, assemble the display module 20C, and then adjust the luminance and chrominance of the entire display module 20C.

Regardless of the number of pixels constituting the light-emitting unit 36 and other factors in the combined configuration of the display units 80a to 80i, the luminance and chrominance of the entire display module 20C can be easily adjusted.

Since the display apparatus in the third embodiment as described above provides a first color conversion means to convert luminance and chrominance for the display module, and provides a second color conversion means to convert the luminance within a display unit, when one of the display units is replaced, the chromaticity of the display apparatus can be readjusted just by rewriting the first luminance and chrominance conversion parameters and the second luminance conversion parameters provided in the replaced display unit.

Fourth Embodiment

In the display apparatus 1000C in the third embodiment there was one stage of display units 80a to 80i in the display module 20C and second color conversion means 37 were provided in the display units 80a to 80i, but there may be multiple stages of display units, and color conversion means may be provided for the display units in each stage. A specific method will be described below under the assumption that there are N stages of display units (where N is an integer equal to or greater than two).

(A) Structure of the Display Apparatus 1000D

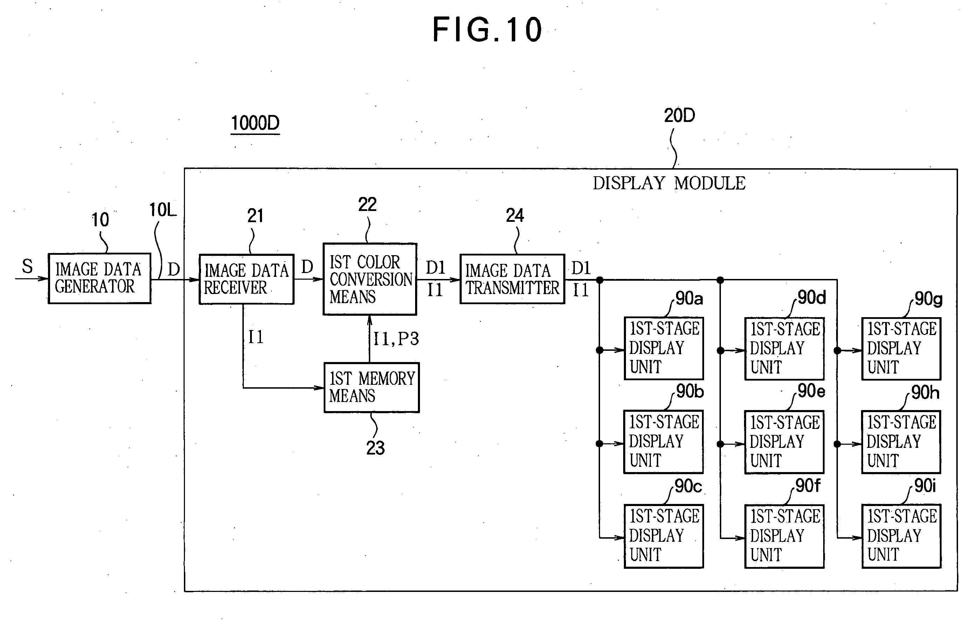

FIG. 10 is a schematic block diagram of the display apparatus 1000D in the fourth embodiment of the invention. As shown in FIG. 10, the display apparatus 1000D comprises a display module 20D and the above-described image data generator 10. The display module 20D comprises first-stage display units 90a to 90i arranged in, for example, a matrix array, the above-described image data receiver 21, the above-described first color conversion means 22, the above-described first memory means 23, and the above-described image data transmitter 24.

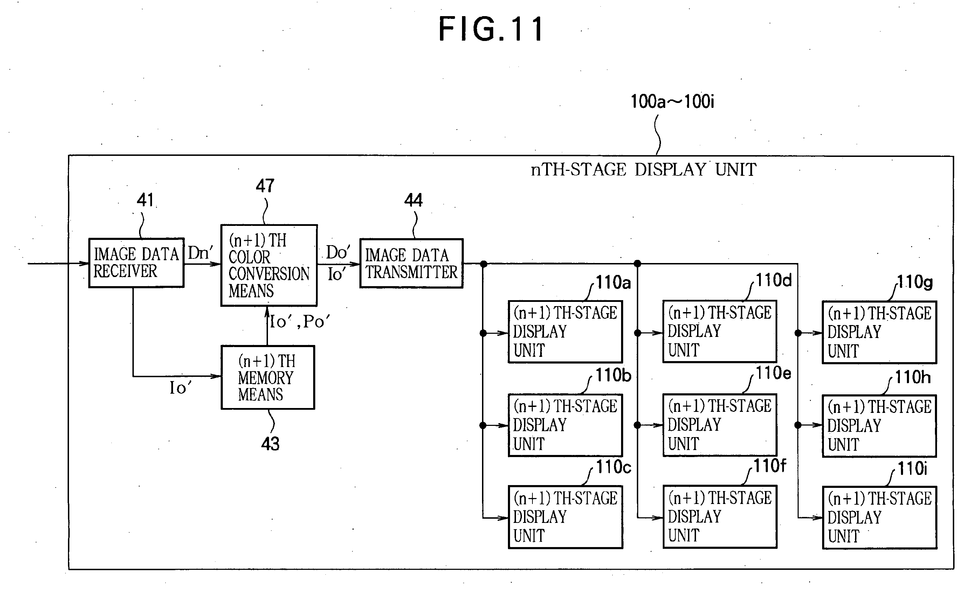

Each of the nth-stage display units 100a to 100i (where n is an integer satisfying $1 \leq n \leq N - 1$) comprises, as shown in FIG. 11, the display units 110a to 110i arranged in a matrix array, for example, in the $(n + 1)$th stage, an image data receiver 41, an $(n + 1)$th color conversion means 47, an $(n + 1)$th memory means 43, and an image data transmitter 44. When n = 1, display units 100a to 100i are the same as display units 90a to 90i.

The image data receiver 41 receives image data supplied from the image data transmitter 24 in FIG. 10 (when n = 1) or image data supplied from the image data transmitter 44 in the corresponding one of the $(n - 1)$th-stage display units (when n > 1), passes the data to the $(n + 1)$th color conversion means 47, and sends display unit device numbers Io', which are generated in the image data receiver 41, to the $(n + 1)$th memory means 43.

The $(n + 1)$th color conversion means 47 receives the image data Dn', and also receives the display unit device numbers Io' and the corresponding $(n + 1)$th luminance conversion parameters Po', which are sent by the $(n + 1)$th memory means 43. The $(n + 1)$th color conversion means 47 converts the luminance of the image data Dn according to the $(n + 1)$th luminance conversion parameters Po', and outputs the converted image data (also referred to as the '$(n + 1)$th color-converted image data') and the display unit device numbers Io', to the image data transmitter 44.

The image data transmitter 44 sends the image data to the $(n + 1)$th-stage display units 110a to 110i designated by the display unit device numbers Io'.

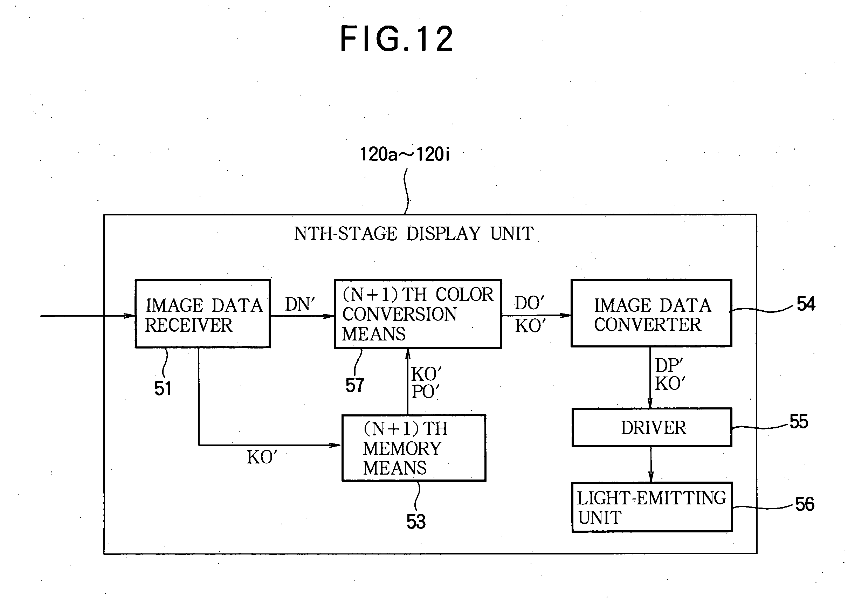

Each of the Nth-stage display units 120a to 120i comprises, as shown in FIG. 12, an image data receiver 51, an $(N + 1)$th color conversion means 57, an $(N + 1)$th memory means 53, an image data converter 54, a driver 55, and a light-emitting unit 56.

The image data receiver 51, the $(N + 1)$th color conversion means 52, the $(N + 1)$th memory means 53, image data converter 54, driver 55, and light-emitting unit 56 have substantially the same structure as the image data receiver 31, the second color conversion means 32, the second memory means 33, image data converter 34, driver 35, and light-emitting unit 36 in FIG. 2.

The image data receiver 51 receives image data DN' supplied from the image data transmitter 44 in the corresponding one of the $(N - 1)$th-stage display units 110a to 110i (the nth-stage display units shown in FIG. 11 when n = N - 1), passes the data to the $(N + 1)$th color conversion means 57, and sends the $(N + 1)$th memory means 53 pixel numbers KO' of pixels in the light-emitting unit 56, which are generated in the image data receiver 51.

The $(N + 1)$th color conversion means 57 receives the image data DN' and receives the pixel numbers KO' of pixels in the light-emitting unit 56 and the corresponding $(N + 1)$th luminance conversion parameters PO', which are sent by the $(N + 1)$th memory means 53. The $(N + 1)$th color conversion means 57 converts the luminance of the image data DN' according to the $(N + 1)$th luminance conversion parameters PO', and outputs the converted image data (also referred to as the '(N + 1)th color-converted image data') and the pixel numbers KO' to the image data converter 54.

The image data converter 54 receives the image data DO' and the pixel numbers KO' of pixels in the light-emitting unit 56, converts the image data DO' to driving signals DP' suited for the light-emitting elements (in this case, LEDs) in the light-emitting unit 56, and outputs these signals and the pixel numbers KO' of the pixels in the light-emitting unit 56.

The driver 55 drives the light-emitting elements in the light-emitting unit 56 corresponding to the pixel numbers KO' of the pixels in the light-emitting unit 36 according to the driving signals DP'.

The first color conversion means 22 shown in FIG. 10 performs luminance and chrominance conversions for the purpose of eliminating luminance and chrominance variations occurring between different display units 90a to 90i in the first stage; information including the parameters (first luminance and chrominance conversion parameters) P3 for the color conversion (luminance and chrominance conversion) performed by the first color conversion means 22 is stored in the first memory means 23. The first color conversion parameters P3 are determined for each display unit on the basis of,information about the display characteristics of the display units 90a to 90i for the purpose of eliminating luminance and chrominance variations occurring between different display units 90a to 90i in the first stage.

The (n + 1)th color conversion means 47 shown in FIG. 11 performs luminance conversions for the purpose of eliminating luminance variations occurring between different (n + 1)th-stage display units 110a to 110i; information including the parameters (the (n + 1)th luminance conversion parameters) Po' for the color conversion (luminance conversion) performed by the (n + 1)th color conversion means 47 is stored in the (n + 1)th memory means 43. The (n + 1)th color conversion parameters Po' are determined for each display unit on the basis of information about the display characteristics of the (n + 1)th-stage display units 110a to 110i for the purpose of eliminating luminance variations occurring between different (n + 1)th-stage display units 110a to 110i.

The (N + 1)th color conversion means 57 shown in FIG. 12 performs luminance conversions for the purpose of eliminating variations in luminance occurring within each of the display units 120a to 120i in the Nth stage; information including the parameters (the (N + 1)th luminance conversion parameters) PO' for the color conversion (luminance conversion) performed by the (N + 1)th color conversion means 57 is stored in the (N + 1)th memory means 53. The (N + 1)th luminance conversion parameters PO' are determined for each display unit on the basis of information about the color characteristics of its light-emitting elements for the purpose of eliminating luminance variations occurring within the display units 120a to 120i.

(B) Method of Luminance Conversion in the (N + 1)th Color Conversion Means 57

Image data DO', expressed as a $3 \times 1$ matrix, are derived from image data DN', likewise expressed as a $3 \times 1$ matrix, by means of a $3 \times 3$ matrix $H_{N+1}'$, as shown in equation (14). In equation (14), $R_{N}'$ is the red signal value in image data DN', $G_{N}'$ is the green signal value in image data DN', and $B_{N}'$ is the blue signal value in image data DN'; $R_{N+1}'$ is the red signal value in image data DO', $G_{N+1}'$ is the green signal value in image data DO', and $B_{N+1}'$ is the blue signal value in image data DO'.

$$\begin{pmatrix} R_{N+1}' \\ G_{N+1}' \\ B_{N+1}' \end{pmatrix} = H_{N+1}' \begin{pmatrix} R_{N}' \\ G_{N}' \\ B_{N}' \end{pmatrix} \qquad (1\,4)$$

(C) Method of Setting the (N + 1)th Luminance Conversion Parameters PO'

To convert the image data by the $3 \times 3$ matrix $H_{N+1}'$ in equation (14), it is necessary to express the (N + 1)th luminance conversion parameters PO' by the $3 \times 3$ matrix $H_{N+1}'$. Values are set by the method described below.

The $3 \times 3$ matrix $H_{N+1}'$ is set as in equation (15). In equation (15), $Y_{Rmeas}$ is the measured luminance when the maximum amount of light is emitted by a red light-emitting element in the light-emitting unit 56 and the amount of light emitted by the green and blue light-emitting elements is zero, $Y_{Gmeas}$ is the measured luminance when the maximum amount of light is emitted by a green light-emitting element in the light-emitting unit 56 and the amount of light emitted by the red and blue light-emitting elements is zero, $Y_{Bmeas}$ is the measured luminance when the maximum amount of light is emitted by a blue light-emitting element in the light-emitting unit 56 and the amount of light emitted by the red and green light-emitting elements is zero, $Y_{RtargetN+1}'$ is the luminance of the target red color in the display units 120a to 120i in the Nth stage, $Y_{GtargetN+1}'$ is the luminance of the target green color in the display units 120a to 120i in the Nth stage, and $Y_{BtargetN+1}'$ is the luminance of the target blue color in the display units 120a to 120i in the Nth stage.

$$H_{N+1'} = \begin{pmatrix} \dfrac{Y_{Rt\,arg\,etN+1}'}{Y_{Rmeas}} & 0 & 0 \\ 0 & \dfrac{Y_{Gt\,arg\,etN+1}'}{Y_{Gmeas}} & 0 \\ 0 & 0 & \dfrac{Y_{Bt\,arg\,etN+1}'}{Y_{Bmeas}} \end{pmatrix} \qquad (1\ 5)$$

The values of $Y_{Rmeas}$, $Y_{Gmeas}$, and $Y_{Bmeas}$ in equation (15) differ for each pixel number KO' in the light-emitting unit 56. The (N + 1)th luminance conversion parameters PO' therefore form a different matrix for each pixel number KO' in the light-emitting unit 56, so it is necessary to switch the (N + 1)th luminance conversion parameters PO' for each pixel number KO' in the light-emitting unit 56.

(D) Method of Converting Luminance in the (n + 1)th Color Conversion Means 47

Image data Do', expressed as a 3 × 1 matrix, are derived from image data Dn', likewise expressed as a 3 × 1 matrix, by means of a 3 × 3 matrix $H_{n+1'}$ as shown in equation (16). In equation (16), $R_{n'}$ is the red signal value in image data Dn', $G_{n'}$ is the green signal value in image data Dn', and $B_{n'}$ is the blue signal value in image data Dn'; $R_{n+1'}$ is the red signal value in image data Do', $G_{n+1'}$ is the green signal value in image data Do', and $B_{n+1'}$ is the blue signal value in image data Do'.

$$\begin{pmatrix} R_{n+1}' \\ G_{n+1}' \\ B_{n+1}' \end{pmatrix} = H_{N+1'} \begin{pmatrix} R_n' \\ G_n' \\ B_n' \end{pmatrix} \qquad (1\ 6)$$

(E) Method of Setting the (n + 1)th Luminance Conversion Parameters Po'

To convert the image data by the 3 × 3 matrix $H_{n+1'}$ in equation (16), it is necessary to express the (n + 1)th luminance conversion parameters Po as the 3 × 3 matrix $H_{n+1'}$. Values are set by the method described below.

The 3 × 3 matrix $H_{n+1'}$ is set as in equation (17). In equation (17), $Y_{Rtargetn+2'}$ is the luminance of the target red color in the display units 110a to 110i in the (n + 1)th stage, $Y_{Gtargetn+2'}$ is the luminance of the target green color in the display units 110a to 110i in the (n + 1)th stage, $Y_{Btargetn+2'}$ is the luminance of the target blue color in the display units 110a to 110i in the (n + 1)th stage, $Y_{Rtargetn+1'}$ is the luminance of the target red color spanning the display units 110a to 110i in the (n + 1)th stage, $Y_{Gtargetn+1'}$ is the luminance of the target green color spanning the display units 110a to 110i in the (n + 1)th stage, and $Y_{Btargetn+1'}$ is the luminance of the target blue color spanning the display units 110a to 110i in the (n + 1)th stage.

$$H_{N+1'} = \begin{pmatrix} \dfrac{Y_{Rt\,arg\,etm+1}'}{Y_{Rt\,arg\,etm+2}'} & 0 & 0 \\ 0 & \dfrac{Y_{Gt\,arg\,etm+1}'}{Y_{Gt\,arg\,etm+2}'} & 0 \\ 0 & 0 & \dfrac{Y_{Bt\,arg\,etm+1}'}{Y_{Bt\,arg\,etm+2}'} \end{pmatrix} \qquad (1\ 7)$$

After luminance has been converted to eliminate variations between the display units 110a to 110i in the (n + 1)th stage, the luminance within the display units 110a to 110i in the (n + 1)th stage is converted. The $3 \times 3$ matrix $H_{n+1}$, therefore incorporates the tristimulus values of the target colors within the display units 110a to 110i in the (n + 1)th stage and the target colors spanning the display units 110a to 110i in the (n + 1)th stage as shown in equation (17).

The values of $Y_{Rtargetn+2}$, $Y_{Gtargetn+2}$ and $Y_{Btargetn+2}$ in equation (17) differ for each of the display units 110a to 110i in the (n + 1)th stage. The (n + 1)th luminance conversion parameters Po' therefore form a different matrix for each display unit 110a to 110i, making it necessary to switch the (n + 1) luminance conversion parameters Po' for each of the (n + 1)th-stage display units 110a to 110i.

Since the display apparatus in the fourth embodiment provides a first color conversion means to convert luminance and chrominance for the display module as described above, and provides further color conversion means to convert luminance and chrominance for the display units in each of the multiple stages present in the display module, when a display unit in the nth stage is replaced, the chromaticity of the display apparatus can be readjusted just by rewriting the nth luminance conversion parameters and the luminance conversion parameters provided in the replaced nth-stage display unit.

Fifth Embodiment

(A) Structure of the Display Apparatus 2000

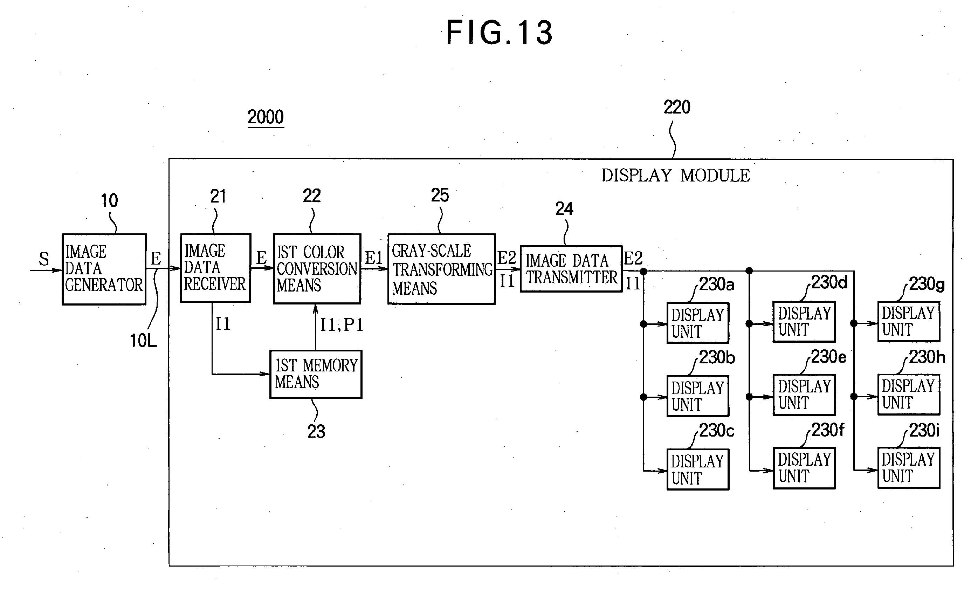

FIG. 13 is a schematic block diagram of the display apparatus 2000 in a fifth embodiment of the invention.

The display apparatus 2000 shown in FIG. 13 comprises a display module 220 and an image data generator 10 disposed external to the display module 220.

The display module 220 comprises display units 230a to 230i arranged in, for example, a matrix array, an image data receiver 21 disposed external to the display units 230a to 230i, a first color conversion means 22, a first memory means 23, a gray-scale transforming means 25 and an image data transmitter 24.

In the illustrated example, there are nine display units 230a to 230i arranged in a three-by-three matrix, but the number of rows and the number of columns may differ from three, and the number of rows may differ from the number of columns.

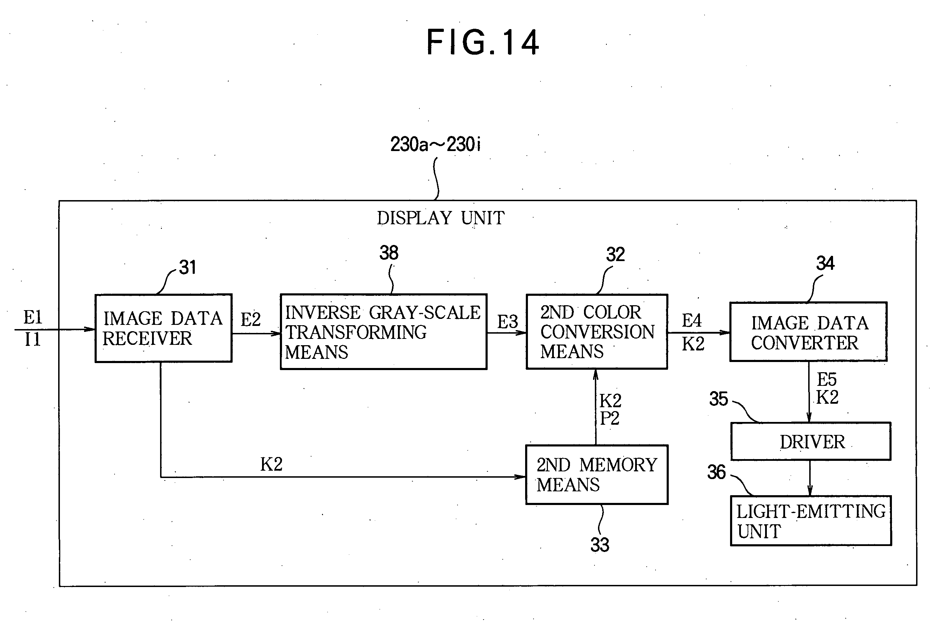

Each of the display units 230a to 230i has the same structure, comprising, as shown in FIG. 14, an image data receiver 31, an inverse gray-scale transforming means 38, a second color conversion means 32, a second memory means 33, an image data converter 34, a driver 35, and a light-emitting unit 36.

The light-emitting unit 36 has the same structure as described in the first embodiment.

The first color conversion means 22 shown in FIG. 13 performs luminance and chrominance conversions for the purpose of eliminating luminance and chrominance variations occurring between different display units 230a to 230i; information including the parameters (first luminance and chrominance conversion parameters) P1 for the color conversion (luminance and chrominance conversion) performed by the first color conversion means 22 is stored in the first memory means 23. The first color conversion parameters P1 are determined for each display unit on the basis of information about the display characteristics of the display units 230a to 230i for the purpose of eliminating luminance and chrominance variations occurring between different display units 230a to 230i.

The second color conversion means 32 shown in FIG. 14 performs luminance and chrominance conversions for the purpose of eliminating variations in luminance and chrominance occurring within each of the display units 230a to 230i; information including the parameters (second luminance and chrominance conversion parameters) P2 for the color conversion (luminance and chrominance conversion) performed by the second color conversion means 32 is stored in the second memory means 33. The second color conversion parameters P2 are determined for each display unit on the basis of information about the color characteristics of its light-emitting elements for the purpose of eliminating luminance and chrominance variations occurring within the display units 230a to 230i.

The image data receiver 21 receives image data E supplied through a transmission line 10L from the image data generator 10, passes the data to the first color conversion means 22, and sends display unit device numbers I1, which are generated in the image data receiver 21, to the first memory means 23.

The first color conversion means 22 receives the image data E with linear luminance, and also receives the display unit device numbers I1 and the corresponding first luminance and chrominance conversion parameters P1, which are sent by the first memory means 23. The first color conversion means 22 converts the luminance and chrominance of the image data E according to the first luminance and chrominance conversion parameters P1, and outputs the converted image data (also referred to as the 'first color-converted image data') E1 and the display unit device numbers I1 to the gray-scale transforming means 25.

The gray-scale transforming means 25 transforms the gray-scale characteristic of the image data E1, and outputs the gray-scale-transformed image data (also referred to as the 'first gray-scale-transformed image data') and the display unit device numbers to the image data transmitter 24.

The image data transmitter 24 sends the gray-scale converted image data E2 to one of the display units 230a to 230i designated by the display unit device numbers I1.

Conversion of the image data E to image data E1 by use of the first luminance and chrominance conversion parameters P1 makes it possible to eliminate luminance and chrominance variations between different display units 230a to 230i that were present when the image data E were output to the display module 220. The first luminance and chrominance conversion parameters P1 stored in the first memory means 23 are organized so as to be switchable according to the display unit device numbers I1.

The image data receiver 31 in the display unit (one of 230a to 230i) that corresponds to the device number I1 receives the image data E2, passes the data to the inverse gray-scale transforming means 38, and sends the second memory means 33 pixel numbers K2, which are generated in the image data receiver 31 and designate pixels in the light-emitting unit 36. The inverse gray-scale transforming means 38 performs an inverse gray-scale transformation that undoes the gray-scale transformation to which the gray-scale-transformed image data E2 were subjected, thereby converting image data E2 to image data E3 with linear luminance, and outputs the image data E3 to the second color conversion means 32.

The second color conversion means 32 receives the image data E3, and receives the pixel numbers of the pixels in the light-emitting unit 36 and the corresponding second luminance and chrominance conversion parameters P2, which are sent by the second memory means 33. The second color conversion means 32 converts the luminance and chrominance of the image data E3 according to the second luminance and chrominance conversion parameters P2, and outputs the converted image data (also referred to as the 'second color-converted image data') E4 and the pixel numbers K2 of pixels in the light-emitting unit 36. The image data converter 34 receives the image data E4 and the pixel numbers K2 of pixels in the light-emitting unit 36, converts the image data E4 to driving signals E5 suited for the light-emitting elements (in this case, LEDs) in the light-emitting unit 36, and outputs these signals and the pixel numbers K2 of the pixels in the light-emitting unit 36. The driver 35 drives the light-emitting elements in the light-emitting unit 36 corresponding to the pixel numbers K2 of the pixels in the light-emitting unit 36 according to the driving signals E5.

Conversion of image data E3 to image data E4 by use of the second luminance and chrominance conversion parameters P2 makes it possible to eliminate luminance and chrominance variations within the display units 230a to 230i that were present when the image data E3 were output to the display units 230a to 230i. The second luminance and chrominance conversion parameters P2 stored in the second memory means 33 are organized so as to be switchable according to the pixel numbers K2 of the pixels in the light-emitting unit 36.

Because a second color conversion means 32 is provided in each of the display units 230a to 230i as described above, when one of the display units 230a to 230i is replaced, it is possible to readjust the chromaticity of the display apparatus 2000 just by rewriting the first luminance and chrominance conversion parameters P1 and the second luminance and chrominance conversion parameters P2 provided in the replaced display unit (one of 230a to 230i).

(A-1) Structure of the Image Data Generator 10

The image data generator 10 is structured as described in the first embodiment with reference to FIG. 4. The image data output from the image data generator 10 has linear luminance.

(B) Method of Converting Luminance and Chrominance in the First Color Conversion Means 22

Image data E1, expressed as a $3 \times 1$ matrix, are derived from image data E, likewise expressed as a $3 \times 1$ matrix, by means of a $3 \times 3$ matrix $H_1$ as shown in equation (18). In equation (18), $R_0$ is the red signal value in image data E, $G_0$ is the green signal value in image data E, and $B_0$ is the blue signal value in image data E; $R_1$ is the red signal value in image data E1, $G_1$ is the green signal value in image data E1, and $B_1$ is the blue signal value in image data E1.

$$\begin{pmatrix} R_1 \\ G_1 \\ B_1 \end{pmatrix} = H_1 \begin{pmatrix} R_0 \\ G_0 \\ B_0 \end{pmatrix} \qquad (1\,8)$$

(C) Method of Setting the First Luminance and Chrominance Conversion Parameters P1

To convert the image data by the $3 \times 3$ matrix $H_1$ in equation (18), it is necessary to express the first luminance and chrominance conversion parameters P1 as the $3 \times 3$ matrix $H_1$. Values are set by the method described below.

The $3 \times 3$ matrix $H_1$ is set as in equation (19). In equation (19), $X_{Rtarget2}$, $Y_{Rtarget2}$, and $Z_{Rtarget2}$ are the tristimulus values of the target red color in the display units 230a to 230i, $X_{Gtarget2}$, $Y_{Gtarget2}$, and $Z_{Gtarget2}$ are the tristimulus values of the target green color in the display units 230a to 230i, $X_{Btarget2}$, $Y_{Btarget2}$, and $Z_{Btarget2}$ are the tristimulus values of the target blue color in the display units 230a to 230i, $X_{Rtarget1}$, $Y_{Rtarget1}$, and $Z_{Rtarget1}$ are the tristimulus values of the target red color spanning the display units 230a to 230i, $X_{Gtarget1}$, $Y_{Gtarget1}$, and $Z_{Gtarget1}$ are the tristimulus values of the target green color spanning the display units 230a to 230i, and $X_{Btarget1}$, $Y_{Btarget1}$, and $Z_{Btarget1}$ are the tristimulus values of the target blue color spanning the display units 230a to 230i.

The tristimulus values of the target colors within the display units 230a to 230i and the tristimulus values of the target colors spanning the display units 230a to 230i may be set to arbitrary values according to the characteristics of the light-emitting elements and the purpose for which the display apparatus will be used.

$$H_1 = \begin{pmatrix} X_{Rtarget2} & X_{Gtarget2} & X_{Btarget2} \\ Y_{Rtarget2} & Y_{Gtarget2} & Y_{Btarget2} \\ Z_{Rtarget2} & Z_{Gtarget2} & Z_{Btarget2} \end{pmatrix}^{-1} \begin{pmatrix} X_{Rtarget1} & X_{Gtarget1} & X_{Btarget1} \\ Y_{Rtarget1} & Y_{Gtarget1} & Y_{Btarget1} \\ Z_{Rtarget1} & Z_{Gtarget1} & Z_{Btarget1} \end{pmatrix} \quad (19)$$

After luminance and chrominance have been converted for the different display units 230a to 230i, the luminance and chrominance within the display units 230a to 230i are converted to eliminate variation inside of the display units 230a to 230i. The 3 × 3 matrix $H_1$ therefore incorporates the tristimulus values of the target colors within the display units 230a to 230i and the target colors spanning the display units 230a to 230i as shown in equation (19).

The values of $X_{Rtarget2}$, $Y_{Rtarget2}$, $Z_{Rtarget2}$, $X_{Gtarget2}$, $Y_{Gtarget2}$, $Z_{Gtarget2}$, $X_{Btarget2}$, $Y_{Btarget2}$, and $Z_{Btarget2}$ in equation (19) differ for each display unit 230a to 230i. The first luminance and chrominance conversion parameters P1 therefore form a different matrix for each display unit 230a to 230i, making it necessary to switch the first luminance and chrominance conversion parameters P1 for each display unit 230a to 230i.

When one of the display units 230a to 230i, (for example, display unit 230a) is replaced, if the tristimulus values of the target colors spanning the display units 230a to 230i are not changed, then of the first luminance and chrominance conversion parameters P1, only the portion corresponding to the device number I1 of display unit 230a have to be rewritten.

(D) Gray-Scale Transformation in the Gray-Scale Transformation Means 25

The gray-scale transforming means 25 transforms the image data E1, which have linear luminance, to image data E2 by the gray-scale transformation shown in equation (20). In equation (20), $C_1$ is the red, green, or blue signal value in image data E1, and $C_2$ is the red, green, or blue signal value in image data E2. The quantity $C_{MAX}$ in equation (20) is the signal value in image data E1 when the light-emitting elements in the light-emitting unit 36 emit the maximum amount of light.

$$C_2 = C_{MAX} \times \left( \frac{C_1}{C_{MAX}} \right)^{\frac{1}{\gamma}} \quad (20)$$

(C=R, G, B, $\gamma$>1)

The transformation shown in equation (20) widens the spacing between adjacent signal values in the lower region of the signal values $C_2$ in image data E2, as compared with the lower region of the signal values $C_1$ in image data E1. This enables the transferred amount of image data E2 to be reduced to less than image data E1 without loss of image quality in the lower region of the signal values $C_1$ in image data E1.

(E) Inverse Gray-Scale Transformation in the Inverse Gray-Scale Transformation Means 38

By performing the inverse gray-scale transformation shown in equation (21) to undo the gray-scale transformation to which the gray-scale-transformed image data E2 were subjected, the inverse gray-scale transforming means 38 outputs image data E3 with linear luminance. In equation (21), $C_2$ is the red, green, or blue signal value in image data E2, and $C_3$ is the red, green, or blue signal value in image data E3. The quantity $C_{MAX}$ in equation (21) is the signal value in image data E2 when the light-emitting elements in the light-emitting unit 36 emit the maximum amount of light.

$$C_3 = C_{MAX} \times \left(\frac{C_2}{C_{MAX}}\right)^{\gamma} \qquad (21)$$

(C=R, G, B, $\gamma$>1)

The transformation shown in equation (21) narrows the spacing between adjacent signal values in the lower region of the signal values $C_3$ in image data E3, as compared with the lower region of the signal values $C_2$ in image data E2. This enables noise to be reduced when image data E2 are transferred from the image data transmitter 24 to the image data receiver 31.

(F) Method of Luminance and Chrominance Conversion in the Second Color Conversion Means 32

In the second color conversion means 32, image data E4, expressed as a 3 × 1 matrix, are derived from image data E3, likewise expressed as a 3 × 1 matrix, by means of a 3 × 3 matrix $H_2$ as shown in equation (22). In equation (22), $R_3$ is the red signal value in image data E3, $G_3$ is the green signal value in image data E3, and $B_3$ is the blue signal value in image data E3; $R_4$ is the red signal value in image data E4, $G_4$ is the green signal value in image data E4, and $B_4$ is the blue signal value in image data E4.

$$\begin{pmatrix} R_4 \\ G_4 \\ B_4 \end{pmatrix} = H_2 \begin{pmatrix} R_3 \\ G_3 \\ B_3 \end{pmatrix} \qquad (22)$$

(G) Method of Setting the Second Luminance and Chrominance Conversion Parameters P2

To convert the image data by the 3 × 3 matrix $H_2$ in equation (22), it is necessary to express the second luminance and chrominance conversion parameters P2 by the 3 × 3 matrix $H_2$. Values are set by the method described below.

The 3 × 3 matrix $H_2$ is set as in equation (23). In equation (23), $X_{Rmeas}$, $Y_{Rmeas}$, and $Z_{Rmeas}$ are measured tristimulus values when the maximum amount of light is emitted by a red light-emitting element in the light-emitting unit 36 and the amount of light emitted by the green and blue light-emitting elements is zero, $X_{Gmeas}$, $Y_{Gmeas}$, and $Z_{Gmeas}$ are measured tristimulus values when the maximum amount of light is emitted by a green light-emitting element in the light-emitting unit 36 and the amount of light emitted by the red and blue light-emitting elements is zero, $X_{Bmeas}$, $Y_{Bmeas}$, and $Z_{Bmeas}$ are measured tristimulus values when the maximum amount of light is emitted by a blue light-emitting element in the light-emitting unit 36 and the amount of light emitted by the red and green light-emitting elements is zero, $X_{Rtarget2}$, $Y_{Rtarget2}$, and $Z_{Rtarget2}$ are the tristimulus values of the target red color in the display units 230a to 230i, $X_{Gtarget2}$, $Y_{Gtarget2}$, and $Z_{Gtarget2}$ are the tristimulus values of the target green color in the display units 230a to 230i, and $X_{Btarget2}$, $Y_{Btarget2}$, and $Z_{Btarget2}$ are the tristimulus values of the target blue color in the display units 230a to 230i.

$$H_2 = \begin{pmatrix} X_{Rmeas} & X_{Gmeas} & X_{Bmeas} \\ Y_{Rmeas} & Y_{Gmeas} & Y_{Bmeas} \\ Z_{Rmeas} & Z_{Gmeas} & Z_{Bmeas} \end{pmatrix}^{-1} \begin{pmatrix} X_{Rtarget2} & X_{Gtarget2} & X_{Btarget2} \\ Y_{Rtarget2} & Y_{Gtarget2} & Y_{Btarget2} \\ Z_{Rtarget2} & Z_{Gtarget2} & Z_{Btarget2} \end{pmatrix} \qquad (23)$$

The values Of $X_{Rmeas}$, $Y_{Rmeas}$, $Z_{Rmeas}$, $X_{Gmeas}$, $Y_{Gmeas}$, $Z_{Gmeas}$, $X_{Bmeas}$, $Y_{Bmeas}$, and $Z_{Bmeas}$ in equation (23) differ for each pixel number K2 in the light-emitting unit 36. The second luminance and chrominance conversion parameters P2 therefore form a different matrix for each pixel number K2 in the light-emitting unit 36, so it is necessary to switch the second luminance and chrominance conversion parameters P2 for each pixel number K2 in the light-emitting unit 36.

Providing a first color conversion means 22 for the display module 220 and providing second color conversion means 32 in the display units 230a to 230i enables the luminance and chrominance of the entire display module 220 to be adjusted and enables an image with uniform chromaticity over the entire display apparatus 2000 to be obtained.

Providing a second color conversion means 32 in each display unit 230a to 230i enables the chromaticity of the display apparatus 2000 to be readjusted when one of the display units 230a to 230i is replaced just by rewriting the first luminance and chrominance conversion parameters P1 and the second luminance and chrominance conversion parameters P2 provided in the replaced display unit (one of 230a to 230i).

These effects make it possible to adjust the luminance and chrominance of a replacement display unit (for example, 230a) at the factory or in a laboratory, take the display unit (230a) to the installation site and install it in the display module 220, and then adjust the luminance and chrominance of the entire display module 220.

When the display module 220 comprises a plurality of display units 230a to 230i, it becomes possible to adjust the luminance and chrominance of each display unit 230a to 230i with its second color conversion means 32, then combine the display units 230a to 230i and adjust the luminance and chrominance of the entire display module 220, which makes the adjustment of the luminance and chrominance of the entire display module 220 easier than when the luminance and chrominance of the entire display module 220 are adjusted all at once.

These effects make it possible to adjust the luminance and chrominance within the display units 230a to 230i at the factory or in a laboratory, take the display units 230a to 230i to the installation site, assemble the display module 220, and then adjust the luminance and chrominance of the entire display module 220.

Regardless of the number of pixels constituting the light-emitting unit 36 and other factors in the combined configuration of the display units 230a to 230i, the luminance and chrominance of the entire display module 220 can be easily adjusted.

Moreover, due to provision of a gray-scale transforming means 25 after the first color conversion means 22 and an inverse gray-scale transforming means 38 before the second color conversion means 32, the transferred amount of image data E2 can be reduced without loss of image quality in the lower region of the signal values $C_1$ in image data E1.

Provision of the inverse gray-scale transforming means 38 before the second color conversion means 32 also enables noise to be reduced when image data E2 are transferred from the image data transmitter 24 to the image data receiver 31.

Sixth Embodiment

In the display apparatus 2000 in the fifth embodiment there was one stage of display units 230a to 230i in the display module 220 and second color conversion means 32 were provided in the display units 230a to 230i, but there may be multiple stages of display units, and color conversion means may be provided for the display units in each stage. A specific method will be described below under the assumption that there are N stages of display units (where N is an integer equal to or greater than two). The following description will focus on the differences from the display apparatus 2000 in FIG. 13; constituent elements equivalent to constituent elements that have already been described will have the same reference characters, and the previous descriptions will be referred to.

(A) Structure of the Display Apparatus 2000B

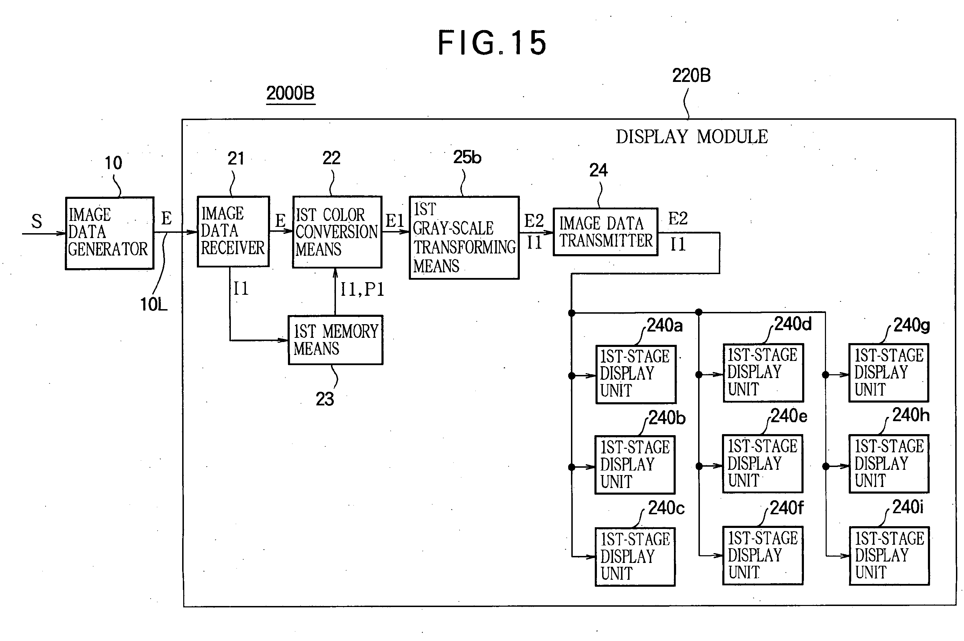

FIG. 15 is a schematic block diagram of the display apparatus 2000B in the sixth embodiment of the invention. As shown in FIG. 15, the display apparatus 2000B comprises a display module 220B and the above-described image data generator 10. The display module 220B comprises the first stage display units 240a to 240i, which are arranged in, for example, a matrix array, the above-described image data receiver 21, the above-described first color conversion means 22, the above-described first memory means 23, a first gray-scale transforming means 25b, and the above-described image data transmitter 24.

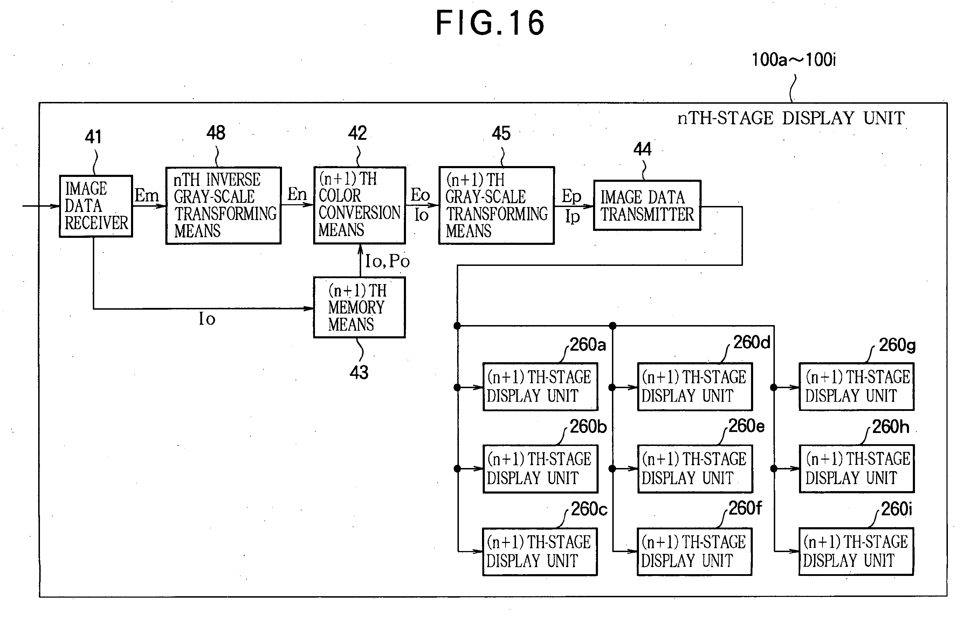

Each of the nth-stage display units 250a to 250i (where n is an integer satisfying $1 \le n \le N - 1$) comprises, as shown in FIG. 16, the display units 260a to 260i arranged in a matrix array, for example, in the (n + 1)th stage, an image data receiver 41, the nth inverse gray-scale transforming means 48, the (n + 1)th color conversion means 42, the (n + 1)th memory means 43, the (n + 1)th gray-scale transforming means 45, and an image data transmitter 44. When n = 1, display units 250a to 250i are the same as display units 240a to 240i.

The image data receiver 41 receives image data supplied from the image data transmitter 24 in FIG. 15 (when n = 1) or image data supplied from the image data transmitter 44 in the corresponding one of the (n - 1)th-stage display units (when n > 1), passes the data to the nth inverse gray-scale transforming means 48, and sends display unit device numbers Io, which are generated in the image data receiver 41, to the (n + 1)th memory means 43.

The nth inverse gray-scale transforming means 48 performs an inverse gray-scale transformation that undoes the gray-scale transformation to which the gray-scale-transformed image data Em were subjected, thereby converting image data Em to image data En with linear luminance, and outputs the image data En to the (n + 1)th color conversion means 42.

The (n + 1)th color conversion means 42 receives the image data En, and also receives the display unit device numbers Io and the corresponding (n + 1)th luminance and chrominance conversion parameters Po, which are sent by the (n + 1)th memory means 43. The (n + 1)th color conversion means 42 converts the luminance and chrominance of the image data En according to the (n + 1)th luminance and chrominance conversion parameters Po, and outputs the converted image data (also referred to as the '(n + 1)th color-converted image data') and the display unit device numbers Io to the (n + 1)th gray-scale transforming means 45.

The (n + 1)th gray-scale transforming means 45 transforms the gray-scale characteristic of the image data Eo, and outputs the gray-scale-transformed image data (also referred to as the '(n + 1)th gray-scale-transformed image data') Ep and the display unit device numbers Io to the image data transmitter 44.

The image data transmitter 44 sends the image data to the (n + 1)th-stage display units 260a to 260i designated by the display unit device numbers Io.

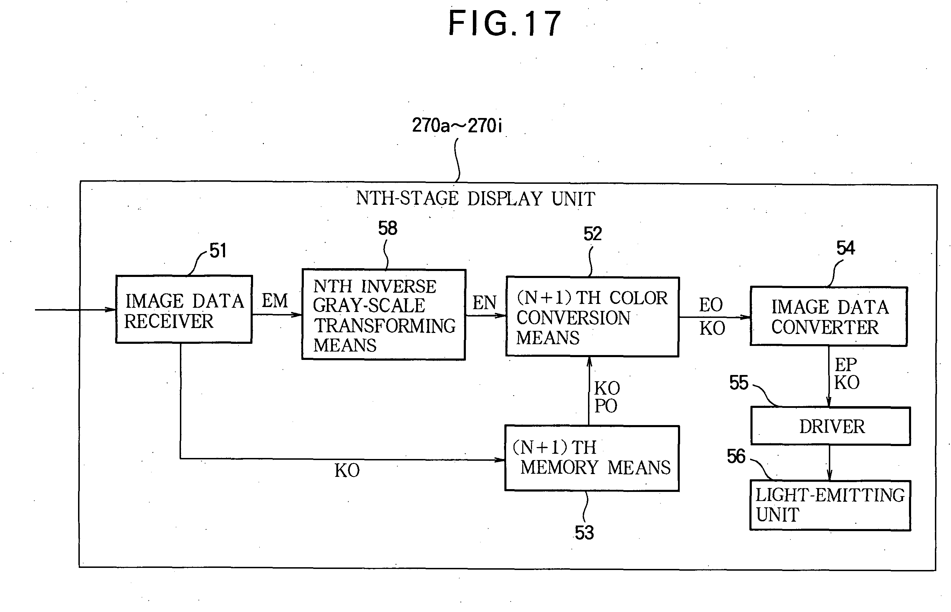

Each of the Nth-stage display units 270a to 270i comprises, as shown in FIG. 17, an image data receiver 51, an Nth inverse gray-scale transforming means 58, an (N + 1)th color conversion means 52, an (N + 1)th memory means 53, an image data converter 54, a driver 55, and a light-emitting unit 56.

The image data receiver 51, the Nth stage Nth inverse gray-scale transforming means 58, the (N + 1)th color conversion means 52, the (N + 1)th memory means 53, image data converter 54, driver 55, and light-emitting unit 56 have substantially the same structure as the image data receiver 31, inverse gray-scale transforming means 38, second color conversion means 32, second memory means 33, image data converter 34, driver 35, and light-emitting unit 36 in FIG. 2.

The image data receiver 51 receives image data EM supplied from the image data transmitter 44 in the corresponding one of display units 250a to 250i (the nth-stage display units shown in FIG. 16 when n = N - 1), passes the data to the Nth inverse gray-scale transforming means 58, and sends the (N + 1)th memory means 53 pixel numbers KO of pixels in the light-emitting unit 56, which are generated in the image data receiver 51.

The Nth inverse gray-scale transforming means 58 performs an inverse gray-scale transformation that undoes the gray-scale transformation to which the gray-scale-transformed image data EM were subjected, thereby converting image data EM to image data EN with linear luminance, and outputs the image data EN to the (N + 1)th color conversion means 52.

The (N + 1)th color conversion means 52 receives the image data EN and receives the pixel numbers KO of pixels in the light-emitting unit 56 and the corresponding (N + 1)th luminance and chrominance conversion parameters PO, which are sent by the (N + 1)th memory means 53. The (N + 1)th color conversion means 52 converts the luminance and chrominance of the image data EN according to the (N + 1)th luminance and chrominance conversion parameters PO, and outputs the converted image data (also referred to as the '(N + 1)th color-converted image data') and the pixel numbers KO to the image data converter 54.

The image data converter 54 receives the image data EO and the pixel numbers KO of pixels in the light-emitting unit 56, converts the image data EO to driving signals EP suited for the light-emitting elements (in this case, LEDs) in the light-emitting unit 56, and outputs these signals and the pixel numbers KO of the pixels in the light-emitting unit 56.

The driver 55 drives the light-emitting elements in the light-emitting unit 56 corresponding to the pixel numbers KO of the pixels in the light-emitting unit 56 according to the driving signals EP.

In the illustrated example, the display units in each stage from the first stage to the Nth stage are arranged in a three-by-three matrix, but the number of rows and the number of columns may each differ from three, and the numbers may differ in different stages.

The first color conversion means 22 shown in FIG. 15 performs luminance and chrominance conversions for the purpose of eliminating luminance and chrominance variations occurring between different display units 240a to 240i in the first stage; information including the parameters (first luminance and chrominance conversion parameters) P1 for the color conversion (luminance and chrominance conversion) performed by the first color conversion means 22 is stored in the first memory means 23. The first color conversion parameters P1 are determined for each display unit on the basis of information about the display characteristics of the display units 240a to 240i for the purpose of eliminating luminance and chrominance variations occurring between different display units 240a to 240i in the first stage.

The (n + 1)th color conversion means 42 shown in FIG. 16 performs luminance and chrominance conversions for the purpose of eliminating luminance and chrominance variations occurring between different display units 260a to 260i in the (n + 1)th-stage; information including the parameters (the (n + 1)th luminance and chrominance conversion parameters) Po for the color conversion (luminance and chrominance conversion) performed by the (n + 1)th color conversion means 42 is stored in the (n + 1)th memory means 43. The (n + 1)th color conversion parameters Po are determined for each display unit on the basis of information about the display characteristics of the display units 260a to 260i in the (n + 1)th stage for the purpose of eliminating luminance and chrominance variations occurring between different display units 260a to 260i in the (n + 1)th stage.

The (N + 1)th color conversion means 52 shown in FIG. 17 performs luminance and chrominance conversions for the purpose of eliminating variations in luminance and chrominance occurring within each of the display units 270a to 270i in the Nth stage; information including the parameters (the (N + 1)th luminance and chrominance conversion parameters) PO for the color conversion (luminance and chrominance conversion) performed by the (N + 1)th Nth inverse gray-scale transforming means 58 is stored in the (N + 1)th memory means 53. The (N + 1)th color conversion parameters PO are determined for each display unit on the basis of information about the color characteristics of its light-emitting elements for the purpose of eliminating luminance and chrominance variations occurring within the display units 270a to 270i in the Nth stage.

The gray-scale transformation is performed in the first gray-scale transforming means 25b by the same method as in the gray-scale transforming means 25, which has already been described, so a description will be omitted here.

(B) Inverse Gray-Scale Transformation in the nth Inverse Gray-Scale Transformation Means 48

By performing the inverse gray-scale transformation shown in equation (24) to undo the gray-scale transformation to which the gray-scale-transformed image data Em were subjected, the nth inverse gray-scale transforming means 48 outputs image data En with linear luminance. In equation (24), $C_m$ is the red, green, or blue signal value in image data Em, and $C_n$ is the red, green, or blue signal value in image data En. The quantity $C_{MAX}$ in equation (24) is the signal value in image data Em when the light-emitting elements in the light-emitting unit 36 emit the maximum amount of light.

$$C_n = C_{MAX} \times \left( \frac{C_m}{C_{MAX}} \right)^\gamma \qquad (24)$$

(C=R, G, B, $\gamma$>1)

The transformation shown in equation (24) narrows the spacing between adjacent signal values in the lower region of the signal values $C_n$ in image data En, as compared with the lower region of the signal values $C_m$ in image data Em. This enables noise to be reduced when image data Em are transferred to the image data receiver 41.

(C) Method of Converting Luminance and Chrominance in the (n + 1)th Color Conversion Means 42

In the (n + 1)th color conversion means 42, image data Eo, expressed as a 3 × 1 matrix, are derived from image data En, likewise expressed as a 3 × 1 matrix, by means of a 3 × 3 matrix $H_{n+1}$ as shown in equation (25). In equation (25), $R_n$ is the red signal value in image data En, $G_n$ is the green signal value in image data En, and $B_n$ is the blue signal value in image data En; $R_{n+1}$ is the red signal value in image data Eo, $G_{n+1}$ is the green signal value in image data Eo, and $B_{n+1}$ is the blue signal value in image data Eo.

$$\begin{pmatrix} R_{n+1} \\ G_{n+1} \\ B_{n+1} \end{pmatrix} = H_{N+1} \begin{pmatrix} R_n \\ G_n \\ B_n \end{pmatrix} \qquad (25)$$

(D) Method of Setting the (n + 1)th Luminance and Chrominance Conversion Parameters Po

To convert the image data by the 3 × 3 matrix $H_{n+1}$ in equation (25), it is necessary to express the (n + 1)th luminance and chrominance conversion parameters Po as the 3 × 3 matrix $H_{n+1}$. Values are set by the method described below.

The 3 × 3 matrix $H_{n+1}$ is set as in equation (26). In equation (26), $X_{Rtargetn+2}$, $Y_{Rtargetn+2}$, and $Z_{Rtargetn+2}$ are the tristimulus values of the target red color in the display units 260a to 260i in the (n + 1)th stage, $X_{Gtargetn+2}$, $Y_{Gtargetn+2}$, and $Z_{Gtargetn+2}$ are the tristimulus values of the target green color in the display units 260a to 260i in the (n + 1)th stage, $X_{Btargetn+2}$, $Y_{Btargetn+2}$, and $Z_{Btargetn+2}$ are the tristimulus values of the target blue color in the display units 260a to 260i in the (n + 1)th stage, $X_{Rtargetn+1}$, $Y_{Rtargetn+1}$, and $Z_{Rtargetn+1}$ are the tristimulus values of the target red color spanning the display units 260a to 260i in the (n + 1)th stage, $X_{Gtargetn+1}$, $Y_{Gtargetn+1}$, and $Z_{Gtargetn+1}$ are the tristimulus values of the target green color spanning the display units 260a to 260i in the (n + 1)th stage, and $X_{Btargetn+1}$, $Y_{Btargetn+1}$, and $Z_{Btargetn+1}$ are the tristimulus values of the target blue color spanning the display units 260a to 260i in the (n + 1)th stage.

$$H_{N+1} = \begin{pmatrix} X_{Rt\,arg\,etn+2} & X_{Gt\,arg\,etn+2} & X_{Bt\,arg\,etn+2} \\ Y_{Rt\,arg\,etn+2} & Y_{Gt\,arg\,etn+2} & Y_{Bt\,arg\,etn+2} \\ Z_{Rt\,arg\,etn+2} & Z_{Gt\,arg\,etn+2} & Z_{Bt\,arg\,etn+2} \end{pmatrix}^{-1} \begin{pmatrix} X_{Rt\,arg\,etn+1} & X_{Gt\,arg\,etn+1} & X_{Bt\,arg\,etn+1} \\ Y_{Rt\,arg\,etn+1} & Y_{Gt\,arg\,etn+1} & Y_{Bt\,arg\,etn+1} \\ Z_{Rt\,arg\,etn+1} & Z_{Gt\,arg\,etn+1} & Z_{Bt\,arg\,etn+1} \end{pmatrix}$$

$$(26)$$

After luminance and chrominance have been converted for the different display units 260a to 260i in the (n + 1)th stage, the luminance and chrominance within the display units 260a to 260i in the (n + 1)th stage are converted. The 3 × 3 matrix $H_{n+1}$ therefore incorporates the tristimulus values of the target colors within the display units 260a to 260i in the (n + 1)th stage and the target colors spanning the display units 260a to 260i in the (n + 1)th stage as shown in equation (26).

The values of $X_{Rtargetn+2}$, $Y_{Rtargetn+2}$, $Z_{Rtargetn+2}$, $X_{Gtargetn+2}$, $Y_{Gtargetn+2}$, $Z_{Gtargetn+2}$, $X_{Btargetn+2}$, $Y_{Btargetn+2}$, and $Z_{Btargetn+2}$ in equation (26) differ for each of the display units 260a to 260i in the (n + 1)th stage. The (n + 1)th luminance and chrominance conversion parameters Po therefore form a different matrix for each of the display units 260a to 260i, making it necessary to switch the (n + 1)th luminance and chrominance conversion parameters Po for each of the (n + 1)th-stage display units 260a to 260i.

(E) Gray-Scale Transformation in the (n + 1)th Gray-Scale Transformation Means 45

The (n + 1)th gray-scale transforming means 45 transforms the image data Eo, which have linear luminance, to image data Ep by the gray-scale transformation shown in equation (27). In equation (27), $C_o$ is the red, green, or blue signal value in image data Eo, and $C_p$ is the red, green, or blue signal value in image data Ep. The quantity $C_{MAX}$ in equation (27) is the signal value in image data Eo when the light-emitting elements in the light-emitting unit 56 emit the maximum amount of light.

$$C_P = C_{MAX} \times \left( \frac{C_o}{C_{MAX}} \right)^{\frac{1}{\gamma}} \qquad (27)$$

The transformation shown in equation (27) widens the spacing between adjacent signal values in the lower region of the signal values Cp in image data Ep, as compared with the lower region of the signal values $C_o$ in image data Eo. This enables the transferred amount of image data Ep to be reduced to less than image data Eo without loss of image quality in the lower region of the signal values $C_o$ in image data Eo.

(F) Inverse Gray-Scale Transformation in the Nth Inverse Gray-Scale Transformation Means 58

By performing the inverse gray-scale transformation shown in equation (28) to undo the gray-scale transformation to which the gray-scale-transformed image data EM were subjected, the Nth inverse gray-scale transforming means 58 outputs image data EN with linear luminance. In equation (28), $C_M$ is the red, green, or blue signal value in image data EM, and $C_N$ is the red, green, or blue signal value in image data EN. The quantity $C_{MAX}$ in equation (28) is the signal value in image data EM when the light-emitting elements in the light-emitting unit 56 emit the maximum amount of light.

$$C_N = C_{MAX} \times \left( \frac{C_M}{C_{MAX}} \right)^{\gamma} \qquad (28)$$

The transformation shown in equation (28) narrows the spacing between adjacent signal values in the lower region of the signal values $C_N$ in image data EN, as compared with the lower region of the signal values $C_M$ in image data EM. This enables noise to be reduced when image data EM are transferred to the image data receiver 51.

(G) Method of Luminance and Chrominance Conversion in the (N + 1)th Color Conversion Means 52

In the (N + 1)th color conversion means 52, image data EO, expressed as a 3 × 1 matrix, are derived from image data EN, likewise expressed as a 3 × 1 matrix, by means of a 3 × 3 matrix $H_{N+1}$ as shown in equation (29). In equation (29), $R_N$ is the red signal value in image data EN, $G_N$ is the green signal value in image data EN, and $B_N$ is the blue signal value in image data EN; $R_{N+1}$ is the red signal value in image data EO, $G_{N+1}$ is the green signal value in image data EO, and $B_{N+1}$ is the blue signal value in image data EO.

$$\begin{pmatrix} R_{N+1} \\ G_{N+1} \\ B_{N+1} \end{pmatrix} = H_{N+1} \begin{pmatrix} R_N \\ G_N \\ B_N \end{pmatrix} \qquad (29)$$

(H) Method of Setting the (N + 1)th Luminance and Chrominance Conversion Parameters PO

To convert the image data by the 3 × 3 matrix $H_{N+1}$ in equation (29), it is necessary to express the second luminance and chrominance conversion parameters PO by the 3 × 3 matrix $H_{N+1}$. Values are set by the method described below.

The 3 × 3 matrix $H_{N+1}$ is set as in equation (30). In equation (30), $X_{Rmeas}$, $Y_{Rmeas}$, and $Z_{Rmeas}$ are measured tristimulus values when the maximum amount of light is emitted by a red light-emitting element in the light-emitting unit 56 and the amount of light emitted by the green and blue light-emitting elements is zero, $X_{Gmeas}$, $Y_{Gmeas}$, and $Z_{Gmeas}$ are measured tristimulus values when the maximum amount of light is emitted by a green light-emitting element in the light-emitting unit 56 and the amount of light emitted by the red and blue light-emitting elements is zero, $X_{Bmeas}$, $Y_{Bmeas}$, and $Z_{Bmeas}$ are measured tristimulus values when the maximum amount of light is emitted by a blue light-emitting element in the light-emitting unit 56 and the amount of light emitted by the red and green light-emitting elements is zero, $X_{RtargetN+1}$, $Y_{RtargetN+1}$, and $Z_{RtargetN+1}$ are the tristimulus values of the target red color in the display units 270a to 270i in the Nth stage, $X_{GtargetN+1}$, $Y_{GtargetN+1}$, and $Z_{GtargetN+1}$ are the tristimulus values of the target green color in the display units 270a to 270i in the Nth stage, and $X_{BtargetN+1}$, $Y_{BtargetN+1}$, and $Z_{BtargetN+1}$ are the tristimulus values of the target blue color in the display units 270a to 270i in the Nth stage.

$$H_{N+1} = \begin{pmatrix} X_{Rmeas} & X_{Gmeas} & X_{Bmeas} \\ Y_{Rmeas} & Y_{Gmeas} & Y_{Bmeas} \\ Z_{Rmeas} & Z_{Gmeas} & Z_{Bmeas} \end{pmatrix}^{-1} \begin{pmatrix} X_{Rt\,\arg\,etN+1} & X_{Gt\,\arg\,etN+1} & X_{Bt\,\arg\,etN+1} \\ Y_{Rt\,\arg\,etN+1} & Y_{Gt\,\arg\,etN+1} & Y_{Bt\,\arg\,etN+1} \\ Z_{Rt\,\arg\,etN+1} & Z_{Gt\,\arg\,etN+1} & Z_{Bt\,\arg\,etN+1} \end{pmatrix} \qquad (30)$$

The values Of $X_{Rmeas}$, $Y_{Rmeas}$, $Z_{Rmeas}$, $X_{Gmeas}$, $Y_{Gmeas}$, $Z_{Gmeas}$, $X_{Bmeas}$, $Y_{Bmeas}$, and $Z_{Bmeas}$ in equation (30) differ for each pixel number KO in the light-emitting unit 56. The (N + 1)th luminance and chrominance conversion parameters PO therefore form a different matrix for each pixel number in the light-emitting unit 56, so it is necessary to switch the (N + 1)th luminance and chrominance conversion parameters PO for each pixel number KO in the light-emitting unit 56.

Providing a first color conversion means 22 for the display module 220B, providing (n + 1)th color conversion means 42 in the display units 250a to 250i and providing (N + 1)th color conversion means 52 in the display units 270a to 270i enables the luminance and chrominance of the entire display module 220B to be adjusted and enables an image with uniform chromaticity over the entire display apparatus 2000B to be obtained.

Providing an (n + 1)th color conversion means 42 in each display unit 250a to 250i enables the chromaticity of the display apparatus 2000B to be readjusted when one of the display units 250a to 250i is replaced just by rewriting the nth luminance and conversion parameters provided in the display unit one stage before the replaced display unit (one of 250a to 250i), and rewriting the (n + 1)th luminance and chrominance conversion parameters Po provided in the replaced display unit (one of 250a to 250i).

These effects make it possible to adjust the luminance and chrominance of a replacement display unit (for example, 250a) at the factory or in a laboratory, take the display unit (250a) to the installation site and install it in the display module 220B, and then adjust the luminance and chrominance of the entire display module 220B.

When the display module 220B comprises a plurality of display units 250a to 250i, it becomes possible to adjust the luminance and chrominance of each of the display units 250a to 250i with the (n + 1)th color conversion means 42, then combine the display units 250a to 250i and adjust the luminance and chrominance of the entire display module 220B with the first color conversion means first color conversion means 22, which makes the adjustment of the luminance and chrominance of the entire display module 220B easier than when the luminance and chrominance of the entire display module 220B are adjusted all at once.

These effects make it possible to adjust the luminance and chrominance within the display units 250a to 250i at the factory or in a laboratory, take the display units 250a to 250i to the installation site, assemble the display module 220B, and then adjust the luminance and chrominance of the entire display module 220B.

Regardless of the number of pixels constituting the light-emitting unit 56 and other factors in the combined configuration of the display units 250a to 250i, the luminance and chrominance of the entire display module 220B can be easily adjusted.

Moreover, by provision of a first gray-scale transforming means 25b after the first color conversion means 22, an nth inverse gray-scale transforming means 48 before the (n + 1)th color conversion means 42, an (n + 1)th gray-scale transforming means 45 after the (n + 1)th color conversion means 42 and an Nth inverse gray-scale transforming means 58 before the (N + 1)th color conversion means 52, the transferred amount of image data E2 and Ep can be reduced compared to that of image data E1, without loss of image quality in the lower region of the signal values $C_1$ in image data E1.

Provision of the nth inverse gray-scale transforming means 48 before the (n + 1)th color conversion means 42 also enables noise to be reduced when image data Em are transferred between display units.

Seventh Embodiment

The second color conversion means 32 provided in the display units 230a to 230i in the display apparatus 2000 in the fifth embodiment performed a luminance and chrominance conversion, but second color conversion means 37 that perform a luminance conversion without performing a chrominance conversion may be provided instead.

That is, a structure in which only luminance is converted in the display units 230a to 230i is also possible. A specific method will be described below.

(A) Structure of the Display Apparatus 2000C

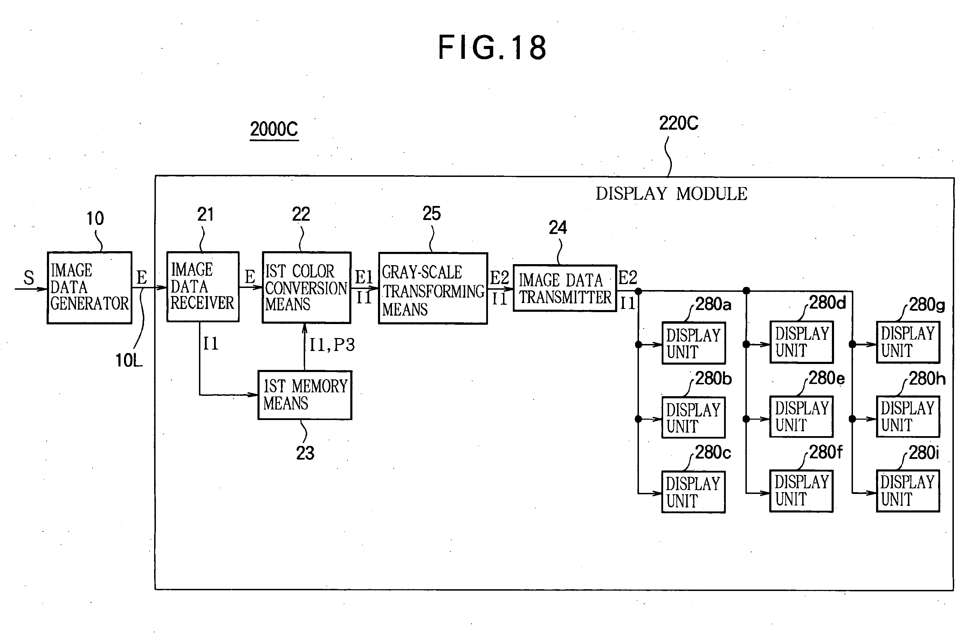

FIG. 18 is a schematic block diagram of the display apparatus 2000C in the seventh embodiment of the invention. As shown in FIG. 18, the display apparatus 2000C comprises a display module 220C and the above-described image data generator 10.

The display module 220C comprises display units 280a to 280i arranged in, for example, a matrix array, the above-described image data receiver 21, the above-described first color conversion means 22, the above-described first memory means 23, the above-described gray-scale transforming means 25 and the above-described image data transmitter 24.

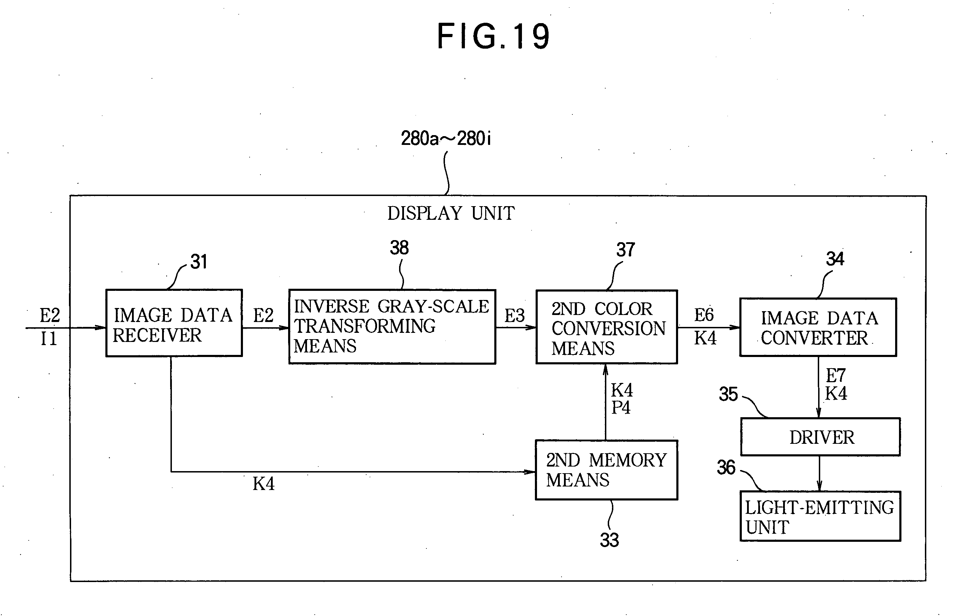

Each of the display units 280a to 280i is structured as shown in FIG. 19. The display unit shown in the drawing is similar to the display units (230a to 230i) shown in FIG. 14, but has a second color conversion means 37 in place of the second color conversion means 32.

The first color conversion means 22 shown in FIG. 18 performs luminance and chrominance conversions for the purpose of eliminating luminance and chrominance variations occurring between different display units 280a to 280i; information including the parameters (first luminance and chrominance conversion parameters) P3 for the color conversion (luminance and chrominance conversion) performed by the first color conversion means 22 is stored in the first memory means 23. The first color conversion parameters P3 are determined for each display unit on the basis of information about the display characteristics of the display units 280a to 280i for the purpose of eliminating luminance and chrominance variations occurring between different display units 280a to 280i.

The second color conversion means 37 shown in FIG. 19 performs only luminance conversions for the purpose of eliminating variations in luminance occurring within each of the display units 280a to 280i; information including the parameters (second luminance conversion parameters) P4 for the color conversion (luminance conversion) performed by the second color conversion means 37 is stored in the second memory means 33. The second luminance conversion parameters P4 are determined for each display unit on the basis of information about the color characteristics of its light-emitting elements for the purpose of eliminating luminance variations occurring within the display units 280a to 280i.

The image data receiver 31 in the one of the display units 280a to 280i that corresponds to the display unit device number I1 receives the image data E2, passes the data to the inverse gray-scale transforming means 38, and sends the second memory means 33 pixel numbers K4, which are generated in the image data receiver 31 and designate pixels in the light-emitting unit 36. The inverse gray-scale transforming means 38 performs an inverse gray-scale transformation that undoes the gray-scale transformation to which the gray-scale-transformed image data E2 were subjected, thereby converting image data E2 to image data E3 with linear luminance, and outputs the image data E3 to the second color conversion means 37. The second color conversion means 37 receives the image data E3, and receives the pixel number K4 of the pixel in the light-emitting unit 36 and the corresponding second luminance conversion parameters P4, which are sent by the second memory means 33. The second color conversion means 37 converts the luminance of the image data E3 according to the second luminance conversion parameters P4, and outputs the converted image data E6 and the pixel numbers K4 of pixels in the light-emitting unit 36. The image data converter 34 receives the image data E6 and the pixel numbers K4 of pixels in the light-emitting unit 36, converts the image data E6 to driving signals E7 suited for the light-emitting elements (in this case, LEDs) in the light-emitting unit 36, and outputs these signals and the pixel numbers K4 of the pixels in the light-emitting unit 36. The driver 35 drives the light-emitting elements in the light-emitting unit 36 corresponding to the pixel numbers K4 of the pixels in the light-emitting unit 36 according to the driving signals E7.

Conversion of image data E3 to image data E6 by use of the second luminance conversion parameters P4 makes it possible to eliminate luminance variations within the display units 280a to 280i that were present when the image data E3 were output to the display units 280a to 280i. In order to eliminate these variations, the second luminance conversion parameters P4 include the target value of luminance of the image data E6 at the time of output to the display units 280a to 280i. The second luminance conversion parameters P4 stored in the second memory means 33 are organized so as to be switchable according to the pixel numbers K2 of the pixels in the light-emitting unit 36.

Because a second color conversion means 37 is provided in each of the display units 280a to 280i as described above, when one of the display units 280a to 280i is replaced, it is possible to readjust the chromaticity of the display apparatus 2000C just by rewriting the first luminance and chrominance conversion parameters P1 and the second luminance conversion parameters P4 provided in the replaced display unit (one of 280a to 280i).

(B) Method of Converting Luminance and Chrominance in the

First Color Conversion Means 22

In the first color conversion means 22, image data E1, expressed as a $3 \times 1$ matrix, are derived from image data E, likewise expressed as a $3 \times 1$ matrix, by means of a $3 \times 3$ matrix $H_3$ as shown in equation (31). In equation (31), $R_0$ is the red signal value in image data E, $G_0$ is the green signal value in image data E, and $B_0$ is the blue signal value in image data E; $R_1$ is the red signal value in image data E1, $G_1$ is the green signal value in image data E1, and $B_1$ is the blue signal value in image data E1.

$$\begin{pmatrix} R_1 \\ G_1 \\ B_1 \end{pmatrix} = H_3 \begin{pmatrix} R_0 \\ G_0 \\ B_0 \end{pmatrix} \qquad (3\,1)$$

(C) Method of Setting the First Luminance and Chrominance Conversion Parameters P3

To convert the image data by the $3 \times 3$ matrix $H_3$ in equation (31), it is necessary to express the first luminance and chrominance conversion parameters P3 as the $3 \times 3$ matrix $H_3$. Values are set by the method described below.

The $3 \times 3$ matrix $H_3$ is set as in equation (32). In equation (32), $X_{Rtarget4}$, $Y_{Rtarget4}$, and $Z_{Rtarget4}$ are the tristimulus values of the target red color in the display units 280a to 280i, $X_{Gtarget4}$, $Y_{Gtarget4}$, and $Z_{Gtarget4}$ are the tristimulus values of the target green color in the display units 280a to 280i, $X_{Btarget4}$, $Y_{Btarget4}$, and $Z_{Btarget4}$ are the tristimulus values of the target blue color in the display units 280a to 280i, $X_{Rtarget1}$, $Y_{Rtarget1}$, and $Z_{Rtarget1}$ are the tristimulus values of the target red color spanning the display units 280a to 280i, $X_{Gtarget1}$, $Y_{Gtarget1}$, and $Z_{Gtarget1}$ are the tristimulus values of the target green color spanning the display units 280a to 280i, and $X_{Btarget1}$, $Y_{Btarget1}$, and $Z_{Btarget1}$ are the tristimulus values of the target blue color spanning the display units 280a to 280i.

$$H_3 = \begin{pmatrix} X_{Rtarget4} & X_{Gtarget4} & X_{Btarget4} \\ Y_{Rtarget4} & Y_{Gtarget4} & Y_{Btarget4} \\ Z_{Rtarget4} & Z_{Gtarget4} & Z_{Btarget4} \end{pmatrix}^{-1} \begin{pmatrix} X_{Rtarget1} & X_{Gtarget1} & X_{Btarget1} \\ Y_{Rtarget1} & Y_{Gtarget1} & Y_{Btarget1} \\ Z_{Rtarget1} & Z_{Gtarget1} & Z_{Btarget1} \end{pmatrix} \qquad (3\,2)$$

After luminance and chrominance have been converted for the different the display units 280a to 280i, the luminance and chrominance within the display units 280a to 280i are converted. The $3 \times 3$ matrix $H_3$ therefore incorporates the tristimulus values of the target colors within the display units 280a to 280i and the target colors spanning the display units 280a to 280i as shown in equation (32).

The values of $X_{Rtarget4}$, $Y_{Rtarget4}$, $Z_{Rtarget4}$, $X_{Gtarget4}$, $Y_{Gtarget4}$, $Z_{Gtarget4}$, $X_{Btarget4}$, $Y_{Btarget4}$, and $Z_{Btarget4}$ in equation (32) differ for each display unit 280a to 280i. The first luminance and chrominance conversion parameters P3 therefore form a different matrix for each display unit 280a to 280i, making it necessary to switch the first luminance and chrominance conversion parameters P3 for each display unit 280a to 280i.

When one of the display units 280a to 280i (for example, display unit 280a) is replaced, if the tristimulus values of the target colors spanning the display units 280a to 280i are not changed, then of the first luminance and chrominance conversion parameters P3, only the portion corresponding to the device number I1 of display unit 280a have to be rewritten.

The tristimulus values of the target colors in the display units 280a to 280i can be set by, for example, the method described below.

First, the minimum $Y_{Rmeas}$, $Y_{Gmeas}$, and $Y_{Bmeas}$ values of all the light-emitting elements in the light-emitting unit 36 are set as the values of $Y_{Rtarget4}$, $Y_{Gtarget4}$, and $Y_{Btarget4}$, as explained above.

Next, the mean chrominance values $x_{Rmeas}$, $y_{Rmeas}$ measured when the red light-emitting elements in the light-emitting unit 36 emit the maximum amount of light and the amount of light emitted by the green and blue light-emitting elements is zero are set as the chrominance values $x_{Rtarget4}$, $Y_{Rtarget4}$ of the target red color in the display units 280a to 280i.

The mean chrominance values $x_{Gmeas}$, $y_{Gmeas}$ measured when the green light-emitting elements in the light-emitting unit 36 emit the maximum amount of light and the amount of light emitted by the red and blue light-emitting elements is zero are set as the chrominance values $x_{Gtarget4}$, $y_{Gtarget4}$ of the target green color in the display units 280a to 280i. The mean chrominance values $x_{Bmeas}$, $Y_{Bmeas}$ measured when the blue light-emitting elements in the light-emitting unit 36 emit the maximum amount of light and the amount of light emitted by the red and green light-emitting elements is zero are set as the chrominance values $x_{Btarget4}$, $y_{Btarget4}$ of the target blue color in the display units 280a to 280i.

Finally, $X_{Rtarget4}$, $Z_{Rtarget4}$, $X_{Gtarget4}$, $Z_{Gtarget4}$, $X_{Btarget4}$, and $Z_{Btarget4}$ are derived from equation (33).

$$X_{Ctarget4} = \frac{x_{Ctarget4}}{y_{Ctarget4}} Y_{Ctarget4}$$

$$Z_{Ctarget4} = \frac{1 - x_{Ctarget4} - y_{Ctarget4}}{y_{Ctarget4}} Y_{Ctarget4} \quad\quad (33)$$

($C = R, G, B$)

(D) Method of Luminance Conversion in the Second Color Conversion Means 37

In the second color conversion means 37, image data E6, expressed as a $3 \times 1$ matrix, are derived from image data E3, likewise expressed as a $3 \times 1$ matrix, by means of a $3 \times 3$ matrix $H_4$ as shown in equation (34). In equation (34), $R_3$ is the red signal value in image data E3, $G_3$ is the green signal value in image data E3, and $B_3$ is the blue signal value in image data E3; $R_6$ is the red signal value in image data E6, $G_6$ is the green signal value in image data E6, and $B_6$ is the blue signal value in image data E6.

$$\begin{pmatrix} R_6 \\ G_6 \\ B_6 \end{pmatrix} = H_4 \begin{pmatrix} R_3 \\ G_3 \\ B_3 \end{pmatrix} \quad\quad (34)$$

(E) Method of Setting the Second Luminance Conversion Parameters P4

To convert the image data by the $3 \times 3$ matrix $H_4$ in equation (34), it is necessary to express the second luminance conversion parameters P4 by the $3 \times 3$ matrix $H_4$. Values are set by the method described below.

The 3 × 3 matrix $H_4$ is set as in equation (35). In equation (35), $Y_{Rmeas}$ is the measured luminance when the maximum amount of light is emitted by a red light-emitting element in the light-emitting unit 36 and the amount of light emitted by the green and blue light-emitting elements is zero, $Y_{Gmeas}$ is the measured luminance when the maximum amount of light is emitted by a green light-emitting element in the light-emitting unit 36 and the amount of light emitted by the red and blue light-emitting elements is zero, $Y_{Bmeas}$ is the measured luminance when the maximum amount of light is emitted by a blue light-emitting element in the light-emitting unit 36 and the amount of light emitted by the red and green light-emitting elements is zero, $Y_{Rtarget4}$ is the luminance of the target red color in the display units 280a to 280i, $Y_{Gtarget4}$ is the luminance of the target green color in the display units 280a to 280i, and $Y_{Btarget4}$ is the luminance of the target blue color in the display units 280a to 280i.

$$H_4 = \begin{pmatrix} \dfrac{Y_{Rt\,arg\,et\,4}}{Y_{Rmeas}} & 0 & 0 \\ 0 & \dfrac{Y_{Gt\,arg\,et\,4}}{Y_{Gmeas}} & 0 \\ 0 & 0 & \dfrac{Y_{Bt\,arg\,et\,4}}{Y_{Bmeas}} \end{pmatrix} \qquad (3\,5)$$

The values of $Y_{Rmeas}$, $Y_{Gmeas}$, and $Y_{Bmeas}$ in equation (35) differ for each pixel number K4 in the light-emitting unit 36. The second luminance conversion parameters P4 therefore form a different matrix for each pixel number in the light-emitting unit 36, so it is necessary to switch the second luminance conversion parameters P4 for each pixel number K4 in the light-emitting unit 36.

In the equation (35), the values of $Y_{Rtarget4}$, $Y_{Rtarget4}$, and $Y_{Rtarget4}$ can be set to the minimum of the values $Y_{Rmeas}$, $Y_{Rmeas}$, and $Y_{Rmeas}$ of all the light-emitting elements in the light-emitting unit 36.

Providing a first color conversion means 22 for the display module 220C and providing second color conversion means 37 in the display units 280a to 280i enables the luminance and chrominance of the entire display module 220C to be adjusted and enables an image with uniform chromaticity over the entire display apparatus 2000C to be obtained.

Providing a second color conversion means 37 in each display unit 280a to 280i enables the chromaticity of the display apparatus 2000C to be readjusted when one of the display units 280a to 280i is replaced just by rewriting the first luminance and chrominance conversion parameters P1 and the second luminance conversion parameters P4 provided in the replaced display unit (one of 280a to 280i).

These effects make it possible to adjust the luminance of a replacement display unit (for example, 280a) at the factory or in a laboratory, take the display unit (280a) to the installation site and install it in the display module 220C, and then adjust the luminance and chrominance of the entire display module 220C.

When the display module 220C comprises a plurality of display units 280a to 280i, it becomes possible to adjust the luminance and chrominance of each of the display units 280a to 280i with its second color conversion means 37, then combine the display units 280a to 280i and adjust the luminance and chrominance of the entire display module 220C with the first color conversion means 22, which makes the adjustment of the luminance and chrominance of the entire display module 220C easier than when the luminance and chrominance of the entire display module 220C are adjusted all at once.

These effects make it possible to adjust the luminance within the display units 280a to 280i at the factory or in a laboratory, take the display units 280a to 280i to the installation site, assemble the display module 220C, and then adjust the luminance and chrominance of the entire display module 220C.

Regardless of the number of pixels constituting the light-emitting unit 36 and other factors in the combined configuration of the display units 280a to 280i, the luminance and chrominance of the entire display module 220C can be easily adjusted.

Moreover, by providing a gray-scale transforming means 25 after the first color conversion means 22 and an inverse gray-scale transforming means 38 before the second color conversion means 37, the transferred amount of image data E2 can be reduced compared with the image data E1, without loss of image quality in the lower region of the signal values $C_1$ in image data E1.

Provision of the inverse gray-scale transforming means 38 before the second color conversion means 37 also enables noise to be reduced when image data E2 are transferred from the image data transmitter 24 to the image data receiver 31.

Eighth Embodiment

In the display apparatus 2000C in the seventh embodiment, there was one stage of display units 280a to 280i in the display module 220C and second color conversion means 37 were provided in the display units 280a to 280i, but there may be multiple stages of display units, and color conversion means may be provided for the display units in each stage. A specific method will be described below under the assumption that there are N stages of display units (where N is an integer equal to or greater than two).

(A) Structure of the Display Apparatus 2000D

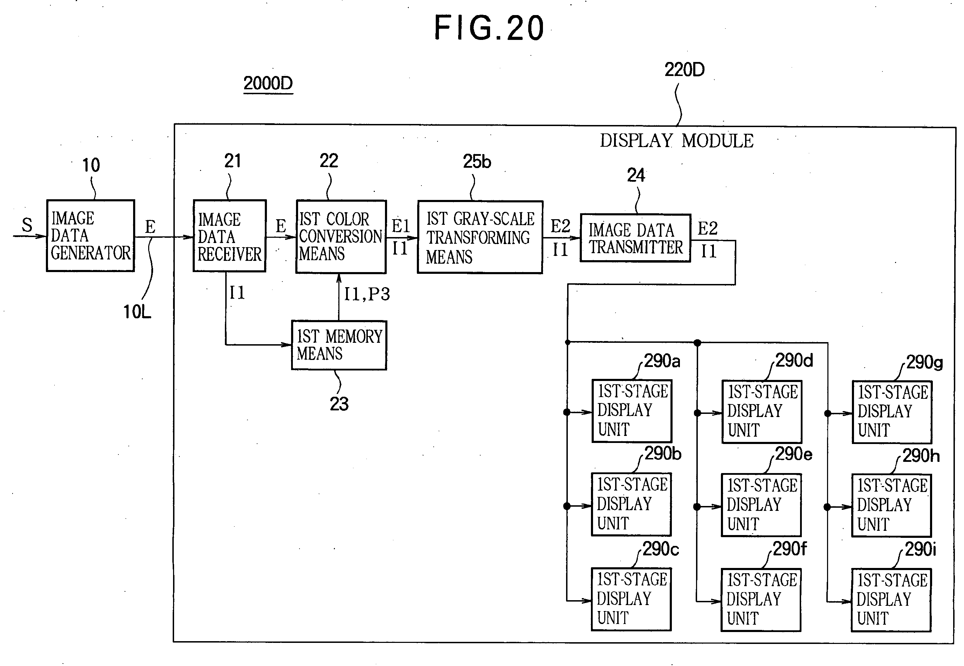

FIG. 20 is a schematic block diagram of the display apparatus 2000D in the eighth embodiment of the invention. As shown in FIG. 20, the display apparatus 2000D comprises a display module 220D and the above-described image data generator 10. The display module 220D comprises display units 290a to 290i arranged in, for example, a matrix array, the above-described image data receiver 21, the above-described first color conversion means 22, the above-described first memory means 23, the above-described first gray-scale transforming means 25b, and the above-described image data transmitter 24.

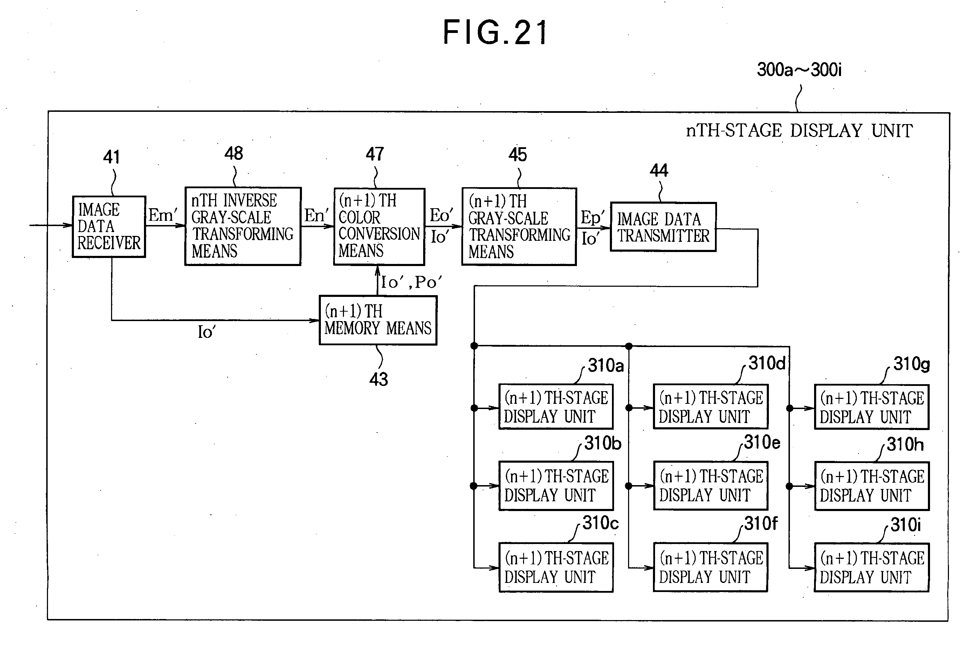

Each of the nth-stage display units 300a to 300i (where n is an integer satisfying $1 \leq n \leq N - 1$) comprises, as shown in FIG. 21, the display units 310a to 310i arranged in a matrix array, for example, in the (n + 1)th stage, the above-described image data receiver 41, the above-described nth inverse gray-scale transforming means 48, an (n + 1)th color conversion means 47, the above-described (n + 1)th memory means 43, and the above-described image data transmitter 44. When n = 1, display units 300a to 300i are the same as display units 290a to 290i.

The image data receiver 41 receives image data supplied from the image data transmitter 24 in FIG. 20 (when n = 1) or image data supplied from the image data transmitter 44 in the corresponding one of the (n - 1)th-stage display units (when n > 1), passes the data to the nth inverse gray-scale transforming means 48, and sends display unit device numbers Io', which are generated in the image data receiver 41, to the (n + 1)th memory means 43.

The nth inverse gray-scale transforming means 48 performs an inverse gray-scale transformation that undoes the gray-scale transformation to which the gray-scale-transformed image data Em' were subjected, thereby converting image data Em' to image data En' with linear luminance, and outputs the image data En' to the (n + 1)th color conversion means 47.

The (n + 1)th color conversion means 47 receives the image data En', and also receives the display unit device numbers Io' and the corresponding (n + 1)th luminance conversion parameters Po', which are sent by the (n + 1)th memory means 43. The (n + 1)th color conversion means 47 converts the luminance of the image data En' according to the (n + 1)th luminance conversion parameters Po', and outputs the converted image data (also referred to as the '(n + 1)th color-converted image data') and the display unit device numbers Io' to the (n + 1)th gray-scale transforming means 45.

The (n + 1)th gray-scale transforming means 45 transforms the gray-scale characteristic of the image data Eo', and outputs the gray-scale-transformed image data (also referred to as the '(n + 1)th gray-scale-transformed image data') Ep' and the display unit device numbers Io' to the image data transmitter 44.

The image data transmitter 44 sends the image data to the (n + 1)th-stage display units 310a to 310i designated by the display unit device numbers Io'.

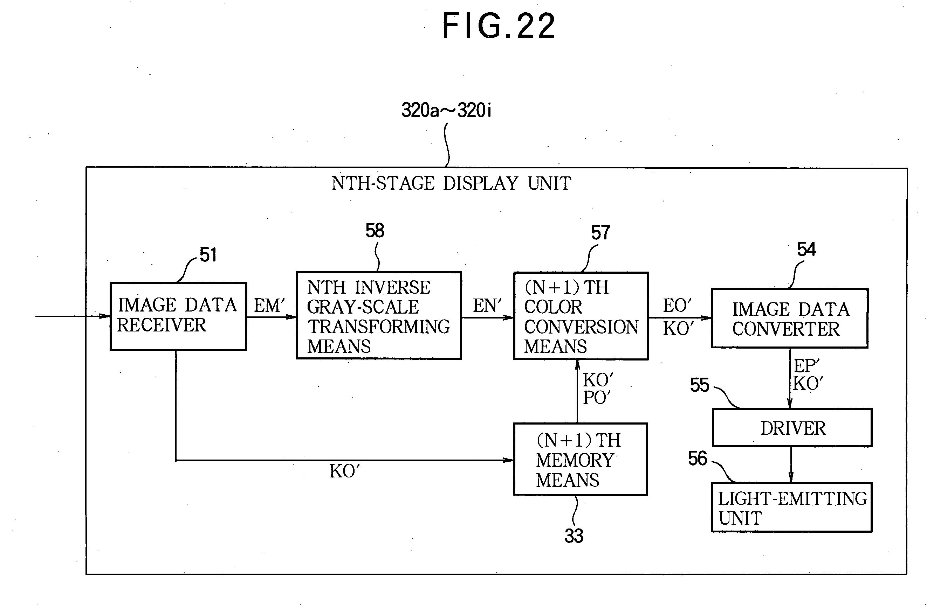

Each of the Nth-stage display units 320a to 320i comprises, as shown in FIG. 22, the above-described image data receiver 51, the above-described Nth inverse gray-scale transforming means 58, an (N + 1)th color conversion means 52, the above-described (N + 1)th memory means 53, the above-described image data converter 54, the above-described driver 55, and the above-described light-emitting unit 56.

The image data receiver 51, the Nth inverse gray-scale transforming means 58, the (N + 1)th color conversion means 52, the (N + 1)th memory means 53, image data converter 54, driver 55, and light-emitting unit 56 have substantially the same structure as the image data receiver 31, inverse gray-scale transforming means 38, second color conversion means 32, second memory means 33, image data converter 34, driver 35, and light-emitting unit 36 in FIG. 14.

The image data receiver 51 receives image data EM' supplied from the image data transmitter 44 in the corresponding one of display units 300a to 300i in the (N - 1)th stage (the nth-stage display units shown in FIG. 21 when n = N - 1), passes the data to the Nth inverse gray-scale transforming means 58, and sends the (N + 1)th memory means 53 pixel numbers KO' of pixels in the light-emitting unit 56, which are generated in the image data receiver 51.

The Nth inverse gray-scale transforming means 58 performs an inverse gray-scale transformation that undoes the gray-scale transformation to which the gray-scale-transformed image data EM' were subjected, thereby converting image data EM' to image data EN' with linear luminance, and outputs the image data EN' to the (N + 1)th color conversion means 57.

The (N + 1)th color conversion means 57 receives the image data EN' and receives the pixel numbers KO' of pixels in the light-emitting unit 56 and the corresponding (N + 1)th luminance conversion parameters PO', which are sent by the (N + 1)th memory means 53. The (N + 1)th color conversion means 57 converts the luminance of the image data EN' according to the (N + 1)th luminance conversion parameters PO', and outputs the converted image data (also referred to as the '(N + 1)th color-converted image data') and the pixel numbers KO' to the image data converter 54.

The image data converter 54 receives the image data EO' and the pixel numbers KO' of pixels in the light-emitting unit 56, converts the image data EO' to driving signals EP' suited for the light-emitting elements (in this case, LEDs) in the light-emitting unit 56, and outputs these signals and the pixel numbers KO' of the pixels in the light-emitting unit 56.

The driver 55 drives the light-emitting elements in the light-emitting unit 56 corresponding to the pixel numbers KO' of the pixels in the light-emitting unit 56 according to the driving signals EP'.

The first color conversion means 22 shown in FIG. 20 performs luminance and chrominance conversions for the purpose of eliminating luminance and chrominance variations occurring between different display units 290a to 290i in the first stage; information including the parameters (first luminance and chrominance conversion parameters) P3 for the color conversion (luminance and chrominance conversion) performed by the first color conversion means 22 is stored in the first memory means 23. The first color conversion parameters P3 are determined for each display unit on the basis of information about the display characteristics of the display units 290a to 290i for the purpose of eliminating luminance and chrominance variations occurring between different display units 290a to 290i in the first stage.

The (n + 1)th color conversion means 47 shown in FIG. 21 performs luminance conversions for the purpose of eliminating luminance variations occurring between different display units 310a to 310i in the (n + 1)th-stage; information including the parameters (the (n + 1)th luminance conversion parameters) Po' for the color conversion (luminance conversion) performed by the (n + 1)th color conversion means 47 is stored in the (n + 1)th memory means 43. The (n + 1)th color conversion parameters Po' are determined for each display unit on the basis of information about the display characteristics of the display units 310a to 310i in the (n + 1)th stage for the purpose of eliminating luminance variations occurring between different display units 310a to 310i in the (n + 1)th stage.

The (N + 1)th color conversion means 57 shown in FIG. 22 performs luminance conversions for the purpose of eliminating variations in luminance occurring within each of the display units 320a to 320i in the Nth stage; information including the parameters (the (N + 1)th luminance conversion parameters) PO' for the color conversion (luminance conversion) performed by the (N + 1)th color conversion means 57 is stored in the (N + 1)th memory means 53. The (N + 1)th luminance conversion parameters PO' are determined for each display unit on the basis of information about the color characteristics of its light-emitting elements for the purpose of eliminating luminance and chrominance variations occurring within the display units 320a to 320i in the Nth stage.

A description of the gray-scale transformation performed in the first gray-scale transforming means 25b will be omitted, since it is performed by the same method as in the gray-scale transforming means 25 in the fifth and seventh embodiments and the first gray-scale transforming means 25b in the sixth embodiment. A description of the gray-scale transformation performed in the (n + 1)th gray-scale transforming means 45 will also be omitted, since it is performed by the same method as in the (n + 1)th gray-scale transforming means 45 in the sixth embodiment. A description of the gray-scale transformation performed in the nth inverse gray-scale transforming means 48 will likewise be omitted, since it is performed by the same method as in the nth inverse gray-scale transforming means 48 in the sixth embodiment. A description of the gray-scale transformation performed in the Nth inverse gray-scale transforming means 58 will also be omitted, since it is performed by the same method as in the Nth inverse gray-scale transforming means 58 in the sixth embodiment.

(B) Method of Converting Luminance in the (n + 1)th Color Conversion Means 47

In the (n + 1)th color conversion means 47, image data Eo', expressed as a 3 × 1 matrix, are derived from image data En', likewise expressed as a 3 × 1 matrix, by means of a 3 × 3 matrix $H_{n+1'}$ as shown in equation (36). In equation (36), $R_{n'}$ is the red signal value in image data En', $G_{n'}$ is the green signal value in image data En', and $B_{n'}$ is the blue signal value in image data En'; $R_{n+1'}$ is the red signal value in image data Eo', $G_{n+1'}$ is the green signal value in image data Eo', and $B_{n+1'}$ is the blue signal value in image data Eo'.

$$\begin{pmatrix} R_{n+1}{}' \\ G_{n+1}{}' \\ B_{n+1}{}' \end{pmatrix} = H_{N+1'} \begin{pmatrix} R_n{}' \\ G_n{}' \\ B_n{}' \end{pmatrix} \qquad (36)$$

(C) Method of Setting the (n + 1)th Luminance Conversion Parameters Po'

To convert the image data by the 3 × 3 matrix $H_{n+1'}$ in equation (36), it is necessary to express the (n + 1)th luminance conversion parameters Po as the 3 × 3 matrix $H_{n+1'}$. Values are set by the method described below.

The 3 × 3 matrix $H_{n+1'}$ is set as in equation (37). In equation (37), $Y_{Rtargetn+2'}$ is the luminance of the target red color in the display units 310a to 310i in the (n + 1)th stage, $Y_{Gtargetn+2'}$ is the luminance of the target green color in the display units 310a to 310i in the (n + 1)th stage, $Y_{Btargetn+2'}$ is the luminance of the target blue color in the display units 310a to 310i in the (n + 1)th stage, $Y_{Rtargetn+1'}$ is the luminance of the target red color spanning the display units 310a to 310i in the (n + 1)th stage, $Y_{Gtargetn+1'}$ is the luminance of the target green color spanning the display units 310a to 310i in the (n +1)th stage, and $Y_{Btargetn+1'}$ is the luminance of the target blue color spanning the display units 310a to 310i in the (n + 1)th stage.

$$
H_{N+1'} = \begin{pmatrix} \dfrac{Y_{Rt\,arg\,etn+1}'}{Y_{Rt\,arg\,etn+2}'} & 0 & 0 \\[2ex] 0 & \dfrac{Y_{Gt\,arg\,etn+1}'}{Y_{Gt\,arg\,etn+2}'} & 0 \\[2ex] 0 & 0 & \dfrac{Y_{Bt\,arg\,etn+1}'}{Y_{Bt\,arg\,etn+2}'} \end{pmatrix} \qquad (37)
$$

After luminance has been converted to eliminate variations between the different display units 310a to 310i in the (n + 1)th stage, the luminance within the display units 310a to 310i in the (n + 1)th stage is converted. The 3 × 3 matrix $H_{n+1'}$ therefore incorporates the tristimulus values of the target colors within the display units 310a to 310i in the (n + 1)th stage and the target colors spanning the display units 310a to 310i in the (n + 1)th stage as shown in equation (37).

The values of $Y_{Rtargetn+2'}$, $Y_{Gtargetn+2'}$ and $Y_{Btargetn+2'}$ in equation (37) differ for each display unit 310a to 310i in the (n + 1)th stage. The (n + 1)th luminance conversion parameters Po' therefore form a different matrix for each of the display units 310a to 310i, making it necessary to switch the (n + 1)th luminance conversion parameters Po' for each of the (n + 1)th-stage display units 310a to 310i.

(B) Method of Luminance Conversion in the (N + 1)th Color Conversion Means 57

In the (N + 1)th color conversion means 57, image data EO', expressed as a 3 × 1 matrix, are derived from image data EN', likewise expressed as a 3 × 1 matrix, by means of a 3 × 3 matrix $H_{N+1'}$ as shown in equation (38). In equation (38), $R_{N'}$ is the red signal value in image data EN', $G_N'$ is the green signal value in image data EN', and $B_N'$ is the blue signal value in image data EN'; $R_{N+1'}$ is the red signal value in image data EO', $G_{N+1'}$ is the green signal value in image data EO', and $B_{N+1'}$ is the blue signal value in image data EO'.

$$
\begin{pmatrix} R_{N+1}' \\ G_{N+1}' \\ B_{N+1}' \end{pmatrix} = H_{N+1'} \begin{pmatrix} R_N' \\ G_N' \\ B_N' \end{pmatrix} \qquad (38)
$$

(E) Method of Setting the (N + 1)th Luminance Conversion Parameters PO'

To convert the image data by the 3 × 3 matrix $H_{N+1'}$ in equation (38), it is necessary to express the (N + 1)th luminance conversion parameters PO' by the 3 × 3 matrix $H_{N+1'}$. Values are set by the method described below.

The 3 × 3 matrix $H_{N+1'}$ is set as in equation (39). In equation (39), $Y_{Rmeas}$ is the measured luminance when the maximum amount of light is emitted by a red light-emitting element in the light-emitting unit 56 and the amount of light emitted by the green and blue light-emitting elements is zero, $Y_{Gmeas}$ is the measured luminance when the maximum amount of light is emitted by a green light-emitting element in the light-emitting unit 56 and the amount of light emitted by the red and blue light-emitting elements is zero, $Y_{Bmeas}$ is the measured luminance when the maximum amount of light is emitted by a blue light-emitting element in the light-emitting unit 56 and the amount of light emitted by the red and green light-emitting elements is zero, $Y_{RtargetN+1'}$ is the luminance of the target red color in the display units 320a to 320i in the Nth stage, $Y_{GtargetN+1'}$ is the luminance of the target green color in the display units 320a to 320i in the Nth stage, and $Y_{BtargetN+1'}$ is the luminance of the target blue color in the display units 320a to 320i in the Nth stage.

$$H_{N+1'} = \begin{pmatrix} \dfrac{Y_{Rt\,arg\,etN+1}'}{Y_{Rmeas}} & 0 & 0 \\ 0 & \dfrac{Y_{Gt\,arg\,etN+1}'}{Y_{Gmeas}} & 0 \\ 0 & 0 & \dfrac{Y_{Bt\,arg\,etN+1}'}{Y_{Bmeas}} \end{pmatrix} \qquad (39)$$

The values of $Y_{Rmeas}$, $Y_{Gmeas}$, and $Y_{Bmeas}$ in equation (39) differ for each pixel number KO' in the light-emitting unit 56. The (N + 1)th luminance conversion parameters PO' therefore form a different matrix for each pixel number KO'in the light-emitting unit 56, so it is necessary to switch the (N + 1)th luminance conversion parameters PO' for each pixel number KO' in the light-emitting unit 56.

Providing a first color conversion means 22 for the display module 220D, providing (n + 1)th color conversion means 47 in the display units 300a to 300i, and providing (N + 1)th color conversion means 57 in the display units 320a to 320i enables the luminance and chrominance of the entire display module 220D to be adjusted and enables an image with uniform chromaticity over the entire display apparatus 2000D to be obtained.

Providing an (n + 1)th color conversion means 47 in each display unit 300a to 300i enables the chromaticity of the display apparatus 2000D to be readjusted when one of the display units 300a to 300i is replaced just by rewriting the nth luminance conversion parameters provided in the display unit one stage before the replaced display unit (one of 300a to 300i), and rewriting the (n + 1)th luminance conversion parameters Po' provided in the replaced display unit (one of 300a to 300i).

These effects make it possible to adjust the luminance of a replacement display unit (for example, 300a) at the factory or in a laboratory, take the display unit (300a) to the installation site and install it in the display module 220D, and then adjust the luminance and chrominance of the entire display module 220D.

When the display module 220D comprises a plurality of display units 300a to 300i, it becomes possible to adjust the luminance and chrominance of each display unit 300a to 300i with the (n + 1)th color conversion means 47, then combine the display units 300a to 300i and adjust the luminance and chrominance of the entire display module 220D with the first color conversion means 22, which makes the adjustment of the luminance and chrominance of the entire display module 220D easier than when the luminance and chrominance of the entire display module 220D are adjusted all at once.

These effects make it possible to adjust the luminance within the display units 300a to 300i at the factory or in a laboratory, take the display units 300a to 300i to the installation site, assemble the display module 220D, and then adjust the luminance and chrominance of the entire display module 220D.

Regardless of the number of pixels constituting the light-emitting unit 56 and other factors in the combined configuration of the display units 300a to 300i, the luminance and chrominance of the entire display module 220D can be easily adjusted.

Moreover, by provision of a first gray-scale transforming means 25b after the first color conversion means 22, an nth inverse gray-scale transforming means 48 before the (n + 1)th color conversion means 47, an (n + 1)th gray-scale transforming means 45 after the (n + 1)th color conversion means 47, and an Nth inverse gray-scale transforming means 58 before the (N + 1)th color conversion means 57, the transferred amount of image data E2 and Ep' can be reduced compared to that of image data E1, without loss of image quality in the lower region of the signal values $C_1$ in image data E1.

Provision of the nth inverse gray-scale transforming means 48 before the (n + 1)th color conversion means 47 also enables noise to be reduced when image data Em' are transferred between display units.

## Claims

1.  A display apparatus in which a plurality of display units are arranged to form a display module, the display apparatus comprising:

a first storage means for storing information including first color conversion parameters for eliminating color variations occurring between different display units, the first color conversion parameters being derived for each display unit on the basis of information about the display characteristics of the display unit; and

a first color conversion means for obtaining image data and the first color conversion parameters, performing a color conversion on the image data according to the first color conversion parameters, and outputting first color-converted image data; wherein

each display unit has

a light-emitting unit in which a plurality of light-emitting elements of different colors are disposed in each pixel,

a second storage means for storing information including second color conversion parameters for eliminating color variations occurring within the display unit, the second color conversion parameters being derived for each pixel on the basis of information about the chromatic characteristics of the light-emitting elements, and

a second color conversion means for obtaining the first color-converted image data and the second color conversion parameters and performing a color conversion on the first color-converted data according to the second color conversion parameters.

2. The display apparatus of claim 1, wherein a purpose of the first color conversion parameters is to eliminate luminance and chrominance variations occurring between different display units, and
the first color conversion means, by performing said color conversion according to said parameters, performs a luminance and chrominance conversion.

3. The display apparatus of claim 1, wherein a purpose of the second color conversion parameters is to eliminate luminance and chrominance variations occurring within the display unit, and
the second color conversion means, by performing said color conversion according to the second color conversion parameters, performs a luminance and chrominance conversion.

4. The display apparatus of claim 1, wherein a purpose of the second color conversion parameters is to eliminate luminance variations occurring within the display unit, and
the second color conversion means, by performing said color conversion according to the second color conversion parameters, performs a luminance conversion.

5. A display apparatus in which a plurality of first-stage display units are arranged to form a display module, wherein a plurality of (n + 1)th-stage display units are arranged to form each nth-stage display unit (where n is an integer satisfying $1 \leq n \leq N - 1$, N being an integer equal to or greater than two),
the display apparatus comprising:

a first storage means for storing information including first color conversion parameters for eliminating color variations occurring between different first-stage display units, the first color conversion parameters being derived for each first-stage display unit on the basis of information about the display characteristics of the first-stage display unit; and

a first color conversion means for obtaining image data and the first color conversion parameters, performing a color conversion on the image data according to the first color conversion parameters, and outputting first color-converted image data; wherein

each nth-stage display unit has

an (n + 1)th storage means for storing information including (n + 1)th color conversion parameters for eliminating color variations occurring between different (n + 1)th-stage display units, the (n + 1)th color conversion parameters being derived for each (n + 1)th-stage display unit on the basis of information about the display characteristics of the (n + 1)th-stage display unit, and

an (n + 1)th color conversion means for obtaining the nth converted image data and the (n + 1)th color conversion parameters and performing a color conversion on the nth converted image data according to the (n + 1)th color conversion parameters; and

each Nth-stage display unit comprises

a light-emitting unit in which a plurality of light-emitting elements of different colors are disposed in each pixel,

an (N + 1)th storage means for storing information including (N + 1)th color conversion parameters for eliminating color variations occurring within the Nth-stage display unit, the (N + 1)th color conversion parameters being derived for each pixel on the basis of information about the chromatic characteristics of the light-emitting elements, and

an (N + 1)th color conversion means for obtaining the Nth color-converted data and the (N + 1)th color conversion parameters and performing a color conversion on the Nth color-converted data according to the (N + 1)th color conversion parameters.

6. The display apparatus of claim 5, wherein a purpose of the first color conversion parameters is to eliminate luminance and chrominance variations occurring between different display units, and
the first color conversion means, by performing said color conversion according to said parameters, performs a luminance and chrominance conversion.

7. The display apparatus of claim 5, wherein a purpose of the (n + 1)th color conversion parameters is to eliminate luminance and chrominance variations occurring between different (n + 1)th-stage display units,
the (n + 1)th color conversion means performs a luminance and chrominance conversion according to the (n + 1) th color conversion parameters,
a purpose of the (N + 1)th color conversion parameters is to eliminate luminance and chrominance variations occurring within the Nth-stage display units, and
the (N + 1)th color conversion means performs a luminance and chrominance conversion according to the (N + 1) th color conversion parameters.

8. The display apparatus of claim 5, wherein a purpose of the (n + 1)th color conversion parameters is to eliminate luminance variations occurring between different (n + 1)th-stage display units,
the (n + 1)th color conversion means performs a luminance conversion according to the (n + 1)th color conversion parameters,
a purpose of the (N + 1)th color conversion parameters is to eliminate luminance variations occurring within the Nth-stage display units, and
the (N + 1)th color conversion means performs a luminance conversion according to the (N + 1)th color conversion parameters.

9. A display apparatus in which a plurality of display units are arranged to form a display module, the display apparatus comprising:

a first storage means for storing information including first color conversion parameters for eliminating color variations occurring between different display units, the first color conversion parameters being derived for each display unit on the basis of information about the display characteristics of the display unit;
a first color conversion means for obtaining image data and the first color conversion parameters, performing a color conversion on the image data according to the first color conversion parameters, and outputting first color-converted image data; and
a gray-scale transformation means for obtaining the first color-converted image data, transforming a gray-scale characteristic of the first color-converted image data, and outputting gray-scale-transformed image data; wherein each display unit has
a light-emitting unit in which a plurality of light-emitting elements of different colors are disposed in each pixel,
a second storage means for storing information including second color conversion parameters for eliminating color variations occurring within the display unit, the second color conversion parameters being derived for each pixel on the basis of information about the chromatic characteristics of the light-emitting elements,
an inverse gray-scale transformation means for obtaining the gray-scale-transformed image data, performing an inverse gray-scale transformation to undo the gray-scale transformation to which the gray-scale-transformed image data were subjected, and outputting inverse gray-scale-transformed image data, and
a second color conversion means for obtaining the inverse gray-scale-transformed image data and the second color conversion parameters and performing a color conversion on the inverse gray-scale-transformed image data according to the second color conversion parameters.

10. The display apparatus of claim 9, wherein a purpose of the first color conversion parameters is to eliminate luminance and chrominance variations occurring between different display units, and
the first color conversion means, by performing said color conversion according to said parameters, performs a luminance and chrominance conversion.

11. The display apparatus of claim 9, wherein a purpose of the second color conversion parameters is to eliminate luminance and chrominance variations occurring within the display unit, and
the second color conversion means, by performing said color conversion according to the second color conversion parameters, performs a luminance and chrominance conversion.

**12.** The display apparatus of claim 9, wherein a purpose of the second color conversion parameters is to eliminate luminance variations occurring within the display unit, and
the second color conversion means, by performing said color conversion according to the second color conversion parameters, performs a luminance conversion.

**13.** A display apparatus in which a plurality of first-stage display units are arranged to form a display module, wherein a plurality of (n + 1)th-stage display units are arranged to form each nth-stage display unit (where n is an integer satisfying $1 \leq n \leq N - 1$, N being an integer equal to or greater than two),
the display apparatus comprising:

a first storage means for storing information including first color conversion parameters for eliminating color variations occurring between different first-stage display units, the first color conversion parameters being derived for each first-stage display unit on the basis of information about the display characteristics of the first-stage display unit;
a first color conversion means for obtaining image data and the first color conversion parameters, performing a color conversion on the image data according to the first color conversion parameters, and outputting first color-converted image data; and
a first gray-scale transformation means for obtaining the first color-converted image data, transforming a gray-scale characteristic of the first color-converted image data, and outputting first gray-scale-transformed image data; wherein
each nth-stage display unit has
an (n + 1)th storage means for storing information including (n + 1)th color conversion parameters for eliminating color variations occurring between different (n + 1)th-stage display units, the (n + 1)th color conversion parameters being derived for each (n + 1)th-stage display unit on the basis of information about the display characteristics of the (n + 1)th-stage display unit,
an nth inverse gray-scale transformation means for obtaining the nth gray-scale-transformed image data, performing an inverse gray-scale transformation to undo the gray-scale transformation to which the nth gray-scale-transformed image data were subjected, and outputting nth inverse gray-scale-transformed image data,
an (n + 1)th color conversion means for obtaining the nth inverse gray-scale-transformed image data and the (n + 1)th color conversion parameters, performing a color conversion on the nth inverse gray-scale-transformed image data according to the (n + 1)th color conversion parameters, and outputting (n + 1)th color-converted image data, and
an (n + 1)th gray-scale transformation means for obtaining the (n + 1)th color-converted image data, transforming a gray-scale characteristic of the (n + 1)th color-converted image data, and outputting (n + 1)th gray-scale-transformed image data; and
each Nth-stage display unit comprises
a light-emitting unit in which a plurality of light-emitting elements of different colors are disposed in each pixel,
an (N+ 1)th storage means for storing information including (N + 1)th color conversion parameters for eliminating color variations occurring within the Nth-stage display unit, the (N + 1)th color conversion parameters being derived for each pixel on the basis of information about the chromatic characteristics of the light-emitting elements,
an Nth inverse gray-scale transformation means for obtaining the Nth gray-scale-transformed image data, performing an inverse gray-scale transformation to undo the gray-scale transformation to which the Nth gray-scale-transformed image data were subjected, and outputting Nth inverse gray-scale-transformed image data, and
an (N + 1)th color conversion means for obtaining the Nth inverse gray-scale-transformed data and the (N + 1)th color conversion parameters and performing a color conversion on the Nth inverse gray-scale-transformed data according to the (N + 1)th color conversion parameters.

**14.** The display apparatus of claim 13, wherein a purpose of the first color conversion parameters is to eliminate luminance and chrominance variations occurring between different display units, and
the first color conversion means, by performing said color conversion according to said parameters, performs a luminance and chrominance conversion.

**15.** The display apparatus of claim 13, wherein a purpose of the (n + 1)th color conversion parameters is to eliminate luminance and chrominance variations occurring between different (n + 1)th-stage display units,
the (n + 1)th color conversion means performs a luminance and chrominance conversion according to the (n + 1)th color conversion parameters,

a purpose of the (N + 1)th color conversion parameters is to eliminate luminance and chrominance variations occurring within the Nth-stage display units, and

the (N + 1)th color conversion means performs a luminance and chrominance conversion according to the (N + 1) th color conversion parameters.

16. The display apparatus of claim 13, wherein a purpose of the (n + 1)th color conversion parameters is to eliminate luminance variations occurring between different (n + 1)th-stage display units,

the (n + 1)th color conversion means performs a luminance conversion according to the (n + 1)th color conversion parameters,

a purpose of the (N + 1)th color conversion parameters is to eliminate luminance variations occurring within the Nth-stage display units, and

the (N + 1)th color conversion means performs a luminance conversion according to the (N + 1)th color conversion parameters.

# FIG.1

EP 1 863 002 A1

# FIG.2

```
D1                    ┌──────────┐  D1  ┌──────────┐  D2  ┌──────────┐         34
──────────────────►   │IMAGE DATA│─────►│2ND COLOR │─────►│IMAGE DATA│◄───
I1                    │RECEIVER  │      │CONVERSION│  K2  │CONVERTER │
                      └──────────┘      │MEANS     │      └──────────┘
                           │            └──────────┘            │
                           31                32    ▲ K2        D3
                                                   │ P2        K2
                                                   │            ▼
                           │            ┌──────────┐      ┌──────────┐
                           └───────────►│2ND MEMORY│      │ DRIVER   │◄─── 35
                              K2        │MEANS     │      └──────────┘
                                        └──────────┘            │
                                             33                 ▼
                                                          ┌──────────┐
                                                          │LIGHT-    │◄─── 36
                                                          │EMITTING  │
                                                          │UNIT      │
                                                          └──────────┘

                        DISPLAY UNIT

                          30a～30i
```

# FIG.3

LR  LG  LB

# FIG.4

10

## IMAGE DATA GENERATOR

S → | A/D | → | IMAGE SIGNAL PROCESSOR | → | IMAGE DATA TRANSMITTER | → 10L → D

11  12  13

# FIG.5

1000B

**DISPLAY MODULE** 20B

10 IMAGE DATA GENERATOR

S → IMAGE DATA GENERATOR

10L — D

21 IMAGE DATA RECEIVER

22 1ST COLOR CONVERSION MEANS

23 1ST MEMORY MEANS

24 IMAGE DATA TRANSMITTER

D, D1, I1, I1,P1

30a 1ST-STAGE DISPLAY UNIT
30b 1ST-STAGE DISPLAY UNIT
30c 1ST-STAGE DISPLAY UNIT
30d 1ST-STAGE DISPLAY UNIT
30e 1ST-STAGE DISPLAY UNIT
30f 1ST-STAGE DISPLAY UNIT
30g 1ST-STAGE DISPLAY UNIT
30h 1ST-STAGE DISPLAY UNIT
30i 1ST-STAGE DISPLAY UNIT

# FIG.6

50a~50i

**nTH-STAGE DISPLAY UNIT**

21 IMAGE DATA RECEIVER — Dn →
22 (n+1) TH COLOR CONVERSION MEANS — Do, Io →
24 IMAGE DATA TRANSMITTER

Io, Po

Io

23 (n+1) TH MEMORY MEANS

60a (n+1) TH-STAGE DISPLAY UNIT
60b (n+1) TH-STAGE DISPLAY UNIT
60c (n+1) TH-STAGE DISPLAY UNIT
60d (n+1) TH-STAGE DISPLAY UNIT
60e (n+1) TH-STAGE DISPLAY UNIT
60f (n+1) TH-STAGE DISPLAY UNIT
60g (n+1) TH-STAGE DISPLAY UNIT
60h (n+1) TH-STAGE DISPLAY UNIT
60i (n+1) TH-STAGE DISPLAY UNIT

EP 1 863 002 A1

# FIG.7

70a~70i

NTH-STAGE DISPLAY UNIT

```
┌──────────────┐      ┌──────────────────┐      ┌──────────────┐
│ IMAGE DATA   │  DN  │ (N+1) TH COLOR   │  DO  │ IMAGE DATA   │      54
│ RECEIVER     │─────▶│ CONVERSION MEANS │─────▶│ CONVERTER    │─────
└──────────────┘      └──────────────────┘  KO  └──────────────┘
      │                        ▲                        │
      51                      52 │ KO                   DP
      │                          │ PO                   KO
      │                          │                      │
      │ KO                ┌──────────────┐              ▼
      └──────────────────▶│ (N+1) TH     │      ┌──────────────┐
                          │ MEMORY MEANS │      │ DRIVER       │      55
                          └──────────────┘      └──────────────┘─────
                                 53                     │
                                                        ▼
                                               ┌──────────────┐
                                               │ LIGHT-EMITTING│     56
                                               │ UNIT         │─────
                                               └──────────────┘
```

EP 1 863 002 A1

# FIG.8

EP 1 863 002 A1

# FIG.9

80a~80i

**DISPLAY UNIT**

D1
I1 →

IMAGE DATA RECEIVER — 31

— D1 →

2ND COLOR CONVERSION MEANS — 37

— D4 K4 →

IMAGE DATA CONVERTER — 34

— D5 K4 →

DRIVER — 35

→ LIGHT-EMITTING UNIT — 36

2ND MEMORY MEANS — 33

K4 P4 →

K4

# FIG.10

EP 1 863 002 A1

# FIG.11

EP 1 863 002 A1

nTH-STAGE DISPLAY UNIT    100a～100i

| 41 | 47 | 44 |
| IMAGE DATA RECEIVER | (n+1) TH COLOR CONVERSION MEANS | IMAGE DATA TRANSMITTER |

Dn'

Do'
Io'

Io', Po'

Io'

43
(n+1) TH MEMORY MEANS

110a
(n+1) TH-STAGE DISPLAY UNIT

110d
(n+1) TH-STAGE DISPLAY UNIT

110g
(n+1) TH-STAGE DISPLAY UNIT

110b
(n+1) TH-STAGE DISPLAY UNIT

110e
(n+1) TH-STAGE DISPLAY UNIT

110h
(n+1) TH-STAGE DISPLAY UNIT

110c
(n+1) TH-STAGE DISPLAY UNIT

110f
(n+1) TH-STAGE DISPLAY UNIT

110i
(n+1) TH-STAGE DISPLAY UNIT

# FIG.12

120a~120i

NTH-STAGE DISPLAY UNIT

IMAGE DATA RECEIVER

51

(N+1)TH COLOR CONVERSION MEANS

57

(N+1)TH MEMORY MEANS

53

IMAGE DATA CONVERTER

54

DRIVER

55

LIGHT-EMITTING UNIT

56

DN'

DO'
KO'

KO'
PO'

KO'

DP'
KO'

# FIG.13

2000

220

DISPLAY MODULE

10

21

22

25

24

S → | IMAGE DATA GENERATOR | E → | IMAGE DATA RECEIVER | E → | 1ST COLOR CONVERSION MEANS | E1 → | GRAY-SCALE TRANSFORMING MEANS | E2 → | IMAGE DATA TRANSMITTER | E2 →

10L

I1

I1;P1

I1

I1

1ST MEMORY MEANS

23

230a DISPLAY UNIT
230b DISPLAY UNIT
230c DISPLAY UNIT

230d DISPLAY UNIT
230e DISPLAY UNIT
230f DISPLAY UNIT

230g DISPLAY UNIT
230h DISPLAY UNIT
230i DISPLAY UNIT

EP 1 863 002 A1

# FIG.14

EP 1 863 002 A1

230a~230i

```
DISPLAY UNIT
```

E1
I1 → | IMAGE DATA RECEIVER (31) | E2 → | INVERSE GRAY-SCALE TRANSFORMING MEANS (38) | E3 → | 2ND COLOR CONVERSION MEANS (32) | E4 K2 → | IMAGE DATA CONVERTER (34) |

K2 P2 ↑

| 2ND MEMORY MEANS (33) |

K2

E5 K2 ↓

35 — | DRIVER (35) |

36 — | LIGHT-EMITTING UNIT (36) |

# FIG.15

EP 1 863 002 A1

# FIG.16

100a~100i

nTH-STAGE DISPLAY UNIT

| 41 | 48 | 42 | 45 | 44 |
|---|---|---|---|---|
| IMAGE DATA RECEIVER | nTH INVERSE GRAY-SCALE TRANSFORMING MEANS | (n+1) TH COLOR CONVERSION MEANS | (n+1) TH GRAY-SCALE TRANSFORMING MEANS | IMAGE DATA TRANSMITTER |

Em · En · Eo Io · Ep Ip

Io,Po

(n+1) TH MEMORY MEANS

Io

43

| 260a | 260d | 260g |
|---|---|---|
| (n+1) TH-STAGE DISPLAY UNIT | (n+1) TH-STAGE DISPLAY UNIT | (n+1) TH-STAGE DISPLAY UNIT |
| 260b | 260e | 260h |
| (n+1) TH-STAGE DISPLAY UNIT | (n+1) TH-STAGE DISPLAY UNIT | (n+1) TH-STAGE DISPLAY UNIT |
| 260c | 260f | 260i |
| (n+1) TH-STAGE DISPLAY UNIT | (n+1) TH-STAGE DISPLAY UNIT | (n+1) TH-STAGE DISPLAY UNIT |

# FIG.17

EP 1 863 002 A1

270a~270i

### NTH-STAGE DISPLAY UNIT

**51** IMAGE DATA RECEIVER

EM →

**58** NTH INVERSE GRAY-SCALE TRANSFORMING MEANS

EN →

**52** (N+1) TH COLOR CONVERSION MEANS

EO KO →

**54** IMAGE DATA CONVERTER

EP KO ↓

**55** DRIVER

↓

**56** LIGHT-EMITTING UNIT

KO ↑ PO

**53** (N+1) TH MEMORY MEANS

KO

FIG.18

# FIG.19

280a~280i

DISPLAY UNIT

E2
I1 → | IMAGE DATA RECEIVER | (31) → E2 → | INVERSE GRAY-SCALE TRANSFORMING MEANS | (38) → E3 → | 2ND COLOR CONVERSION MEANS | (37) → E6 / K4 → | IMAGE DATA CONVERTER | (34)

K4 ↑ P4

| 2ND MEMORY MEANS | (33)

K4

E7 / K4

35 → | DRIVER | (35)

36 → | LIGHT-EMITTING UNIT | (36)

EP 1 863 002 A1

# FIG.20

EP 1 863 002 A1

# FIG.21

300a~300i

nTH-STAGE DISPLAY UNIT

**41**
IMAGE DATA RECEIVER

Em′ →

**48**
nTH INVERSE GRAY-SCALE TRANSFORMING MEANS

En′ →

**47**
(n+1)TH COLOR CONVERSION MEANS

Eo′ / Io′ →

**45**
(n+1)TH GRAY-SCALE TRANSFORMING MEANS

Ep′ / Io′ →

**44**
IMAGE DATA TRANSMITTER

↑ Io′,Po′

**43**
(n+1)TH MEMORY MEANS

Io′

310a — (n+1)TH-STAGE DISPLAY UNIT
310d — (n+1)TH-STAGE DISPLAY UNIT
310g — (n+1)TH-STAGE DISPLAY UNIT

310b — (n+1)TH-STAGE DISPLAY UNIT
310e — (n+1)TH-STAGE DISPLAY UNIT
310h — (n+1)TH-STAGE DISPLAY UNIT

310c — (n+1)TH-STAGE DISPLAY UNIT
310f — (n+1)TH-STAGE DISPLAY UNIT
310i — (n+1)TH-STAGE DISPLAY UNIT

# FIG.22

320a~320i

**NTH-STAGE DISPLAY UNIT**

IMAGE DATA RECEIVER (51) → EM′ → NTH INVERSE GRAY-SCALE TRANSFORMING MEANS (58) → EN′ → (N+1)TH COLOR CONVERSION MEANS (57) → EO′ / KO′ → IMAGE DATA CONVERTER (54) → EP′ / KO′ → DRIVER (55) → LIGHT-EMITTING UNIT (56)

(N+1)TH MEMORY MEANS (33) → KO′ / PO′ → (N+1)TH COLOR CONVERSION MEANS

IMAGE DATA RECEIVER → KO′ → (N+1)TH MEMORY MEANS

EP 1 863 002 A1

## INTERNATIONAL SEARCH REPORT

| | International application No. |
|---|---|
| | PCT/JP2006/305102 |

**A. CLASSIFICATION OF SUBJECT MATTER**
*G09G3/32*(2006.01), *G09G3/20*(2006.01), *G09G5/00*(2006.01)

According to International Patent Classification (IPC) or to both national classification and IPC

**B. FIELDS SEARCHED**

Minimum documentation searched (classification system followed by classification symbols)
G09G3/00-5/42

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2002-23684 A  (Mitsubishi Electric Corp.),<br>23 January, 2002 (23.01.02),<br>Par. Nos. [0026] to [0048], [0058] to [0070];<br>Figs. 1 to 5, 9<br>& US 2002/0003544 A1 | 1-8<br>9-16 |
| Y<br>A | JP 6-236161 A  (Sony Corp.),<br>23 August, 1994 (23.08.94),<br>Par. Nos. [0013] to [0036]; Figs. 1 to 8<br>(Family: none) | 1-8<br>9-16 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 April, 2006 (14.04.06) | 25 April, 2006 (25.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/305102 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2003-202838 A  (Matsushita Electric Industrial Co., Ltd.),<br>18 July, 2003 (18.07.03),<br>Par. Nos. [0038] to [0040], [0047] to [0049];<br>Figs. 10, 11, 17<br>(Family: none) | 1-16 |
| A | JP 6-195036 A  (Hitachi Kokusai Electric Inc.),<br>15 July, 1994 (15.07.94),<br>Par. Nos. [0017] to [0028]; Figs. 1 to 3<br>(Family: none) | 1-16 |
| A | JP 2004-302217 A  (Matsushita Electric Industrial Co., Ltd.),<br>28 October, 2004 (28.10.04),<br>Par. Nos. [0008] to [0032]; Figs. 1 to 4<br>(Family: none) | 1-16 |
| A | JP 2002-232905 A  (Sony Corp.),<br>16 August, 2002 (16.08.02),<br>Full text; all drawings<br>& US 2002/0135828 A1    & EP 1229744 A2 | 9-16 |

Form PCT/ISA/210 (continuation of second sheet) (April 2005)

**EP 1 863 002 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003099003 A